# EUROPEAN PATENT APPLICATION

(11) **EP 4 668 725 A1**
(43) Date of publication of application: **24.12.2025**
(21) Application number: 24823549.1
(22) Date of filing: 17.04.2024
(51) Int. Cl.: H04M 1/60, H04M 1/02, H04W 4/80, H04W 88/02

(54) **ELECTRONIC DEVICE FOR CHANGING AUDIO SIGNAL TO BE TRANSMITTED TO EXTERNAL ELECTRONIC DEVICE ON BASIS OF LOCATION OF EXTERNAL ELECTRONIC DEVICE, AND METHOD THEREFOR**

(30) Priority: 11.06.2023 KR 20230074538; 27.06.2023 KR 20230083043
(71) Applicant: Samsung Electronics Co., Ltd., Suwon-si, Gyeonggi-do 16677 (KR)
(72) Inventor: CHOI, Jinwook, Suwon-si, Gyeonggi-do 16677 (KR); KIM, Byoungjun, Suwon-si, Gyeonggi-do 16677 (KR); KIM, Sunglak, Suwon-si, Gyeonggi-do 16677 (KR); KIM, Hyunmuk, Suwon-si, Gyeonggi-do 16677 (KR); RYU, Jooyeol, Suwon-si, Gyeonggi-do 16677 (KR); PARK, Changi, Suwon-si, Gyeonggi-do 16677 (KR); YOON, Shinhyuk, Suwon-si, Gyeonggi-do 16677 (KR); JANG, Gyudae, Suwon-si, Gyeonggi-do 16677 (KR); JUN, Jaeyoung, Suwon-si, Gyeonggi-do 16677 (KR); PARK, Jihea, Suwon-si, Gyeonggi-do 16677 (KR)
(74) Representative: HGF
(86) International application number: PCT/KR2024/005170
(87) International publication number: WO 2024/258028

(57) **Abstract**

A processor of an electronic device according to one embodiment can be configured to display a plurality of videos respective flat portions of a flexible display. The processor can be configured to use a first communication circuit based on UWB to identify the location of an external electronic device that has established communication with the electronic device. The processor can be configured to transmit one audio signal among audio signals corresponding to the plurality of videos to the external electronic device through a second communication circuit on the basis of the identified location.

## Description

### [Technical Field]

The present disclosure relates to an electronic device for changing an audio signal to be transmitted to an external electronic device based on a position of the external electronic device and a method thereof.

### [Background Art]

A form and/or a size of an electronic device are diversifying. To enhance mobility, electronic devices with decreased size and/or decreased volume are being designed. Electronic devices may include displays for visualizing information. As the number of functions supported by the electronic device increases, a size of the display may be increased to visualize more information to a user and/or to support execution of the functions. For example, the size of the display may be designed to be maintained or increased while reducing the size and/or a volume of the electronic device.

The information described above may be provided as a related art for a purpose of helping understanding of the present disclosure. No claim or determination is raised as to whether any of the above-described descriptions may be applied as a prior art related to the present disclosure.

### [Disclosure]

### [Technical Solution]

An electronic device according to an embodiment may include a first housing, a second housing, a third housing, a flexible display disposed on the first housing, the second housing, and the third housing, one or more sensors for identifying a first angle between the first housing and the second housing, and a second angle between the second housing and the third housing, a first communication circuit for performing UWB communication, a second communication circuit for performing Bluetooth communication, memory, including one or more storage media, storing executable instructions, and at least one processor, including processing circuitry, for executing the instructions by accessing the memory. The instructions, when executed by the at least one processor individually or collectively, may cause the electronic device to display a plurality of videos in respective flat portions of the flexible display identified by at least one of the first angle or the second angle. The instructions, when executed by the at least one processor individually or collectively, may cause the electronic device to identify, by using the first communication circuit, a position of an external electronic device that has established communication with the electronic device. The instructions, when executed by the at least one processor individually or collectively, may cause the electronic device to, based on the identified position of the external electronic device, transmit, to the external electronic device through the second communication circuit, an audio signal among audio signals corresponding to the plurality of videos.

A method of an electronic device according to an embodiment may include displaying a plurality of videos in respective flat portions of a flexible display of the electronic device. The method may include, by using a first communication circuit for performing UWB communication, identifying a position of an external electronic device that has established communication with the electronic device. The method may include, based on the identified position, transmitting, to the external electronic device through a second communication circuit for performing Bluetooth communication, an audio signal among audio signals corresponding to the plurality of videos.

An electronic device according to an embodiment may include a first housing, a second housing, a third housing, a flexible display disposed on the first housing, the second housing, and the third housing, one or more sensors for identifying a first angle of the first housing and the second housing, and a second angle of the second housing and the third housing, a first communication circuit for an ultra-wideband (UWB), a second communication circuit for Bluetooth, and a processor. The processor may be configured to display a plurality of videos in respective flat portions of the flexible display distinguished by at least one of the first angle or the second angle. The processor may be configured to, based on identifying an external electronic device including a speaker, identify, by using the first communication circuit, a position of the external electronic device with respect to the electronic device. The processor may be configured to transmit, to the external electronic device through the second communication circuit, an audio signal identified based on the position among audio signals corresponding to the plurality of videos.

A method of an electronic device according to an embodiment may include displaying a plurality of videos in respective flat portions of a flexible display of the electronic device. The method may include, based on identifying an external electronic device including a speaker, identifying, by using a first communication circuit for a UWB, a position of the external electronic device with respect to the electronic device. The method may include transmitting, to the external electronic device through a second communication circuit for Bluetooth, an audio signal identified based on the position among audio signals corresponding to the plurality of videos.

An electronic device according to an embodiment may include a first housing, a second housing, a third housing, a flexible display disposed on the first housing, the second housing, and the third housing, one or more sensors for identifying a first angle of the first housing and the second housing, and a second angle of the second housing and the third housing, a first communication circuit for a UWB, a second communication circuit for Bluetooth, memory, including one or more storage media, storing instructions, and at least one processor, including processing circuitry. The instructions, when executed by the at least one processor individually or collectively, may cause the electronic device to display a video in a first portion among flat portions of the flexible display distinguished by at least one of the first angle or the second angle. The instructions, when executed by the at least one processor individually or collectively, may cause the electronic device to, based on identifying an external electronic device including a speaker, identify, by using the first communication circuit, a position of the external electronic device with respect to the electronic device. The instructions, when executed by the at least one processor individually or collectively, may cause the electronic device to, based on identifying the position adjacent to a second portion different from the first portion, change a portion in which the video is displayed to the second portion from the first portion.

A method of an electronic device according to an embodiment may include displaying a video in a first portion among flat portions of a flexible display of the electronic device. The method may include, based on identifying an external electronic device including a speaker identifying, by using a first communication circuit for an ultra-wideband (UWB), a position of the external electronic device with respect to the electronic device. The method may include, based on identifying the position adjacent to a second portion different from the first portion, changing a portion in which the video is displayed to the second portion from the first portion.

### [Description of the Drawings]

FIG. 1 exemplarily illustrates a deformable electronic device.
FIG. 2 illustrates an example of a block diagram of an electronic device according to an embodiment.
FIG. 3 illustrates an example of a flowchart of an electronic device according to an embodiment.
FIGS. 4A to 4B exemplarily illustrate different states of an electronic device according to an embodiment.
FIGS. 5A to 5B illustrate an example of an operation of an electronic device that identifies an external electronic device by using a wireless signal of a UWB.
FIG. 6 illustrates an example of an operation of an electronic device that adjusts a volume of an audio signal transmitted to an external electronic device based on a position of the external electronic device.
FIG. 7 illustrates an example of an operation of an electronic device for identifying a relationship between an external electronic device and an audio signal.
FIG. 8 illustrates an example of an operation of an electronic device that adjusts a state of a communication circuit for a UWB.
FIG. 9 exemplarily illustrates a state of an electronic device according to an embodiment.
FIGS. 10A to 10B illustrate an example of an operation of an electronic device that adjusts a position of a video displayed on a flexible display based on a position of an external electronic device.
FIG. 11 illustrates an example of a flowchart of an electronic device according to an embodiment.
FIG. 12 illustrates an example of a flowchart of an electronic device according to an embodiment.
FIG. 13 is a block diagram of an electronic device in a network environment according to various embodiments.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

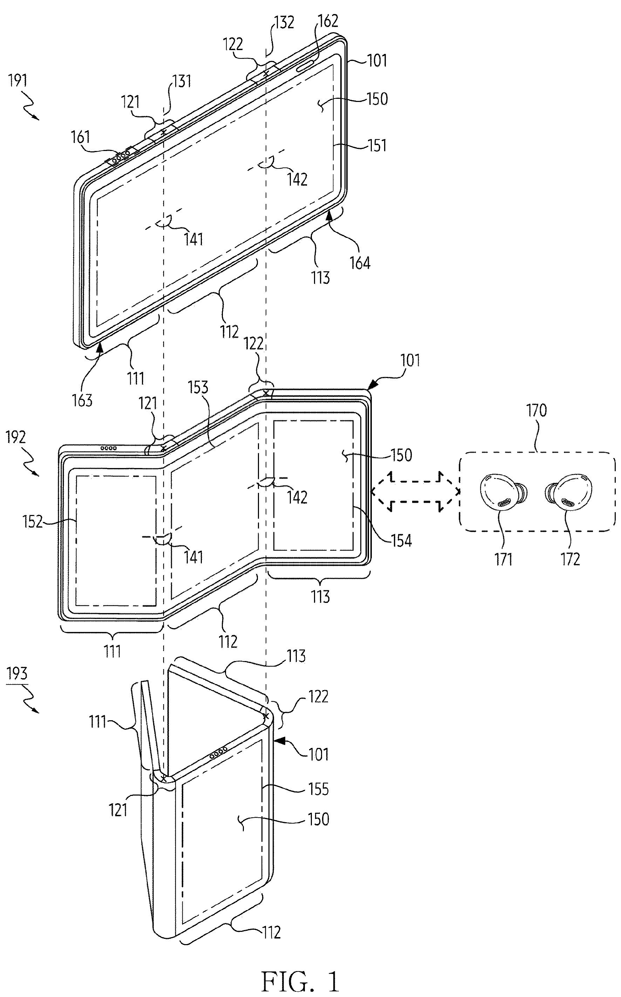

FIG. 1 exemplarily illustrates a deformable electronic device 101. In an embodiment, for example, in terms of being owned by a user, the electronic device 101 may be referred to as a terminal (or a user terminal). The terminal may include, for example, a personal computer (PC) such as a laptop and a desktop. The terminal may include, for example, a smartphone, a smartpad, and/or a tablet PC. The terminal may include a smart accessory such as a smartwatch and/or a head-mounted device (HMD).

Referring to FIG. 1, the electronic device 101 according to an embodiment may include a deformable housing. Based on deformability, the housing of the electronic device 101 may be divided into a plurality of portions. For example, the housing of the electronic device 101 of FIG. 1 may include a first housing 111, a second housing 112, and a first hinge assembly 121 for rotatably coupling the first housing 111 and the second housing 112. By the first hinge assembly 121, a relative position, an angle, a form, and/or a distance of the first housing 111 and the second housing 112, which are rigid bodies, may be changed by an external force. The housing of the electronic device 101 may include the second housing 112, a third housing 113, and a second hinge assembly 122 for rotatably coupling the second housing 112 and the third housing 113. By the second hinge assembly 122, a relative position, an angle, a form, a posture, and/or a distance of the second housing 112 and the third housing 113 may be changed by an external force. Based on the first hinge assembly 121 and the second hinge assembly 122, the electronic device 101 may have a structure that may be folded more than once.

Referring to FIG. 1, a first folding axis 131 is a rotation axis of the first housing 111 and the second housing 112 connected through the first hinge assembly 121, and may be formed in the first hinge assembly 121. As the first housing 111 and/or the second housing 112 is rotated with respect to the first folding axis 131, a first angle 141 between the first housing 111, the first hinge assembly 121, and the second housing 112 may be changed. A second folding axis 132 is a rotation axis of the second housing 112 and the third housing 113 connected through the second hinge assembly 122, and may be formed in the second hinge assembly 122. As the second housing 112 and/or the third housing 113 is rotated with respect to the second folding axis 132, a second angle 142 between the second housing 112, the second hinge assembly 122, and the third housing 113 may be changed.

Referring to FIG. 1, the electronic device 101 according to an embodiment may include a flexible display 150 disposed on a surface (e.g., a front surface of the electronic device 101) of the first housing 111, the second housing 112, and the third housing 113. For example, the flexible display 150 may be disposed from the first housing 111 to the third housing 113 across the first hinge assembly 121, the second housing 112, and the second hinge assembly 122. Hereinafter, the first angle 141 may correspond to an angle between a surface of the first housing 111 and a surface of the second housing 112 on which the flexible display 150 is disposed, which may be folded by the first folding axis 131 of the first hinge assembly 121. Hereinafter, the second angle 142 may correspond to an angle between the surface of the second housing 112 and a surface of the third housing 113 on which the flexible display 150 is disposed, which may be folded by the second folding axis 132 of the second hinge assembly 122.

Referring to FIG. 1, the electronic device 101 according to an embodiment may include a first speaker 161 and/or a third speaker 163 disposed on the first housing 111. The electronic device 101 may include a second speaker 162 and/or a fourth speaker 164 disposed on the third housing 113. The third speaker 163 may be disposed on a second periphery of the first housing 111 opposite to a first periphery of the first housing 111 in which the first speaker 161 is disposed. The fourth speaker 164 may be disposed on a second periphery of the third housing 113 opposite to a first periphery of the third housing 113 in which the second speaker 162 is disposed. Even though the second speaker 162 disposed on the surface of the third housing 113 in which the flexible display 150 is disposed and the first speaker 161, the third speaker 163, and the fourth speaker 164 disposed on a side surface connected to the front surface of the electronic device 101 are exemplarily illustrated, positions of speakers (e.g., the first speaker 161 to the fourth speaker 164) included in the electronic device 101 are not limited to positions illustrated in FIG. 1.

Referring to FIG. 1, different forms of the electronic device 101 supporting deformability based on a plurality of folding axes (e.g., the first folding axis 131 and/or the second folding axis 132) are illustrated. Referring to FIG. 1, different states (e.g., a first state 191 to a third state 193) of the electronic device 101 divided by the first angle 141 and the second angle 142 are illustrated. The first state 191 of the electronic device 101 in which the first angle 141 and the second angle 142 are substantially a straight angle (e.g., approximately 180 °) may be referred to as a fully unfolded state, an opened state, an unfolded state, a flat state, and/or a planar state. In the first state 191, the flexible display 150 disposed from the first housing 111 to the third housing 113 may have a substantially flat form. In the first state 191, a single plane 151 may be formed on the front surface of the electronic device 101 on which the flexible display 150 is disposed.

Referring to FIG. 1, a second state 192 in which the first angle 141 exceeds the straight angle and the second angle 142 is an angle less than the straight angle is illustrated. A state of the electronic device 101, including the second state 192, in which at least one of the first angle 141 or the second angle 142 exceeds the straight angle and another angle is less than the straight angle may be referred to as a sub-unfolded state (or a sub-fold state), a flex state, and/or a bidirectional flex state. The bidirectional flex state of the electronic device 101 is not limited to the exemplary second state 192 of FIG. 1, and may be maintained while the first angle 141 exceeds approximately 180 ° and is less than approximately 360 °, and the second angle 142 is less than approximately 180 ° and exceeds approximately 0 °. In the bidirectional flex state, a plurality of planes may be formed by the first hinge assembly 121 and the second hinge assembly 122. Referring to the second state 192, the flexible display 150 may include three planes 152, 153, and 154. Each of the plane 152 corresponding to a portion of the flexible display 150 disposed on the first housing 111, the plane 153 corresponding to a portion of the flexible display 150 disposed on the second housing 112, and the plane 154 corresponding to a portion of the flexible display 150 disposed on the third housing 113 may be directed to different directions from each other.

Referring to FIG. 1, the third state 193 in which both the first angle 141 and the second angle 142 exceed the straight angle is illustrated. A state of the electronic device 101, including the third state 193, in which both the first angle 141 and the second angle 142 exceed the straight angle may be referred to as an out-unfolded state (or an out-fold state), the flex state, and/or a tridirectional flex state. The tridirectional flex state of the electronic device 101 may be maintained while both the first angle 141 and the second angle 142 exceed approximately 180 °. In the tridirectional flex state, a plurality of planes may be formed by the first hinge assembly 121 and the second hinge assembly 122. Referring to FIG. 1, a plane 155 corresponding to the portion of the flexible display 150 disposed on the second housing 112 is illustrated. In the tridirectional flex state, different portions of the flexible display 150 disposed in each of the first housing 111 to the third housing 113 may be directed to different directions from each other. In the tridirectional flex state of the electronic device 101 including the third state 193, the flexible display 150 may be viewed from all directions toward the electronic device 101.

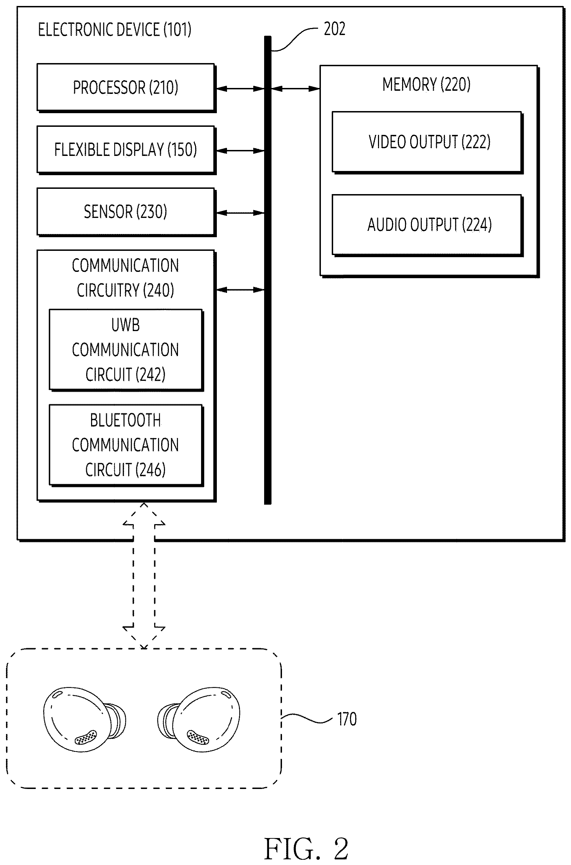

The electronic device 101 according to an embodiment may wirelessly communicate with an external electronic device 170 including a speaker, such as an earbud. Referring to FIG. 1, an exemplary exterior of the external electronic device 170 configured to communicate with the electronic device 101 is illustrated. The external electronic device 170 may include a first sub-device 171 having a form designed to be attached to a left ear of the user and a second sub-device 172 having a form designed to be attached to a right ear of the user. The external electronic device 170 may further include a case (or a cradle) capable of accommodating the first sub-device 171 and the second sub-device 172. The external electronic device 170 communicating with the electronic device 101 may mean that at least one of the first sub-device 171 or the second sub-device 172 establishes a communication link with the electronic device 101. In a state that any one of the first sub-device 171 or the second sub-device 172 establishes the communication link with the electronic device 101, another one of the first sub-device 171 or the second sub-device 172 may identify and/or obtain an audio signal from the communication link based on sniffing. Hardware included in the electronic device 101 to communicate with the external electronic device 170 and/or a software application executed based on the hardware will be described with reference to FIG. 2.

The electronic device 101 according to an embodiment may visualize information through the flexible display 150. For example, in a case that flat portions of the flexible display 150 are directed to different directions from each other, such as the second state 192 and/or the third state 193, the electronic device 101 may display different information in each of the portions. Information displayed by the electronic device 101 through the flexible display 150 may include media content such as a video. While playing a video stored in the electronic device 101 or streamed from a network (e.g., Internet) in the flexible display 150, the electronic device 101 may play an audio signal corresponding to the video (or synchronized with the video) by using a speaker (e.g., the first speaker 161 to the fourth speaker 164) and/or the external electronic device 170.

In an embodiment, the electronic device 101 may play one or more videos by using the flexible display 150. In the first state 191, the electronic device 101 may play one video on the entire flat plane 151 of the flexible display 150. In the second state 192, the electronic device 101 may play one video on any one plane of the planes 152, 153, and 154 of the flexible display 150. In the second state 192, the electronic device 101 may simultaneously play two videos on each of two planes among the planes 152, 153, and 154 of the flexible display 150. In the second state 192 and/or the third state 193, different videos may be simultaneously played on each of the planes of the flexible display 150 of the electronic device 101. In the second state 192 to a third state 1932 in which the planes of the flexible display 150 are directed to different directions from each other, the videos played through each of the planes may be viewed from different directions, which are directed to the electronic device 101.

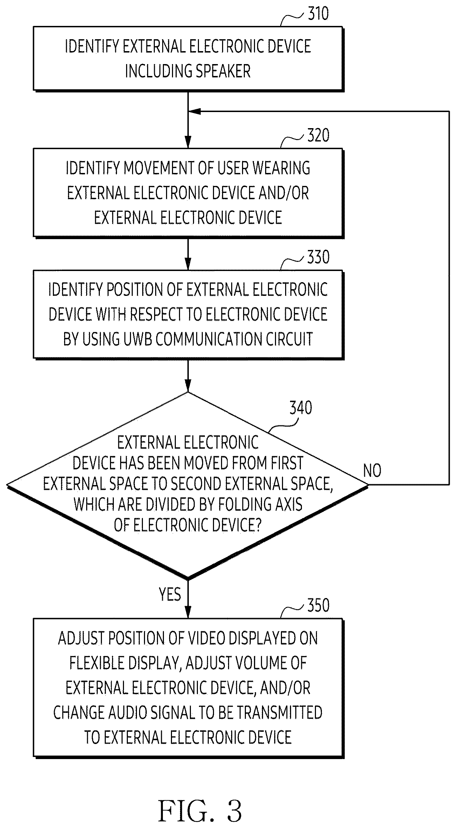

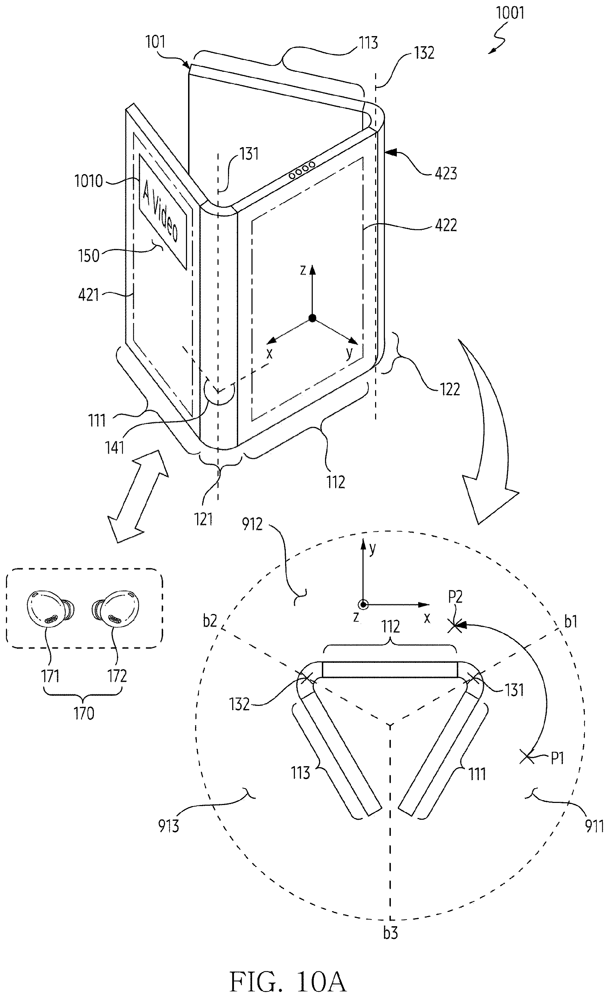

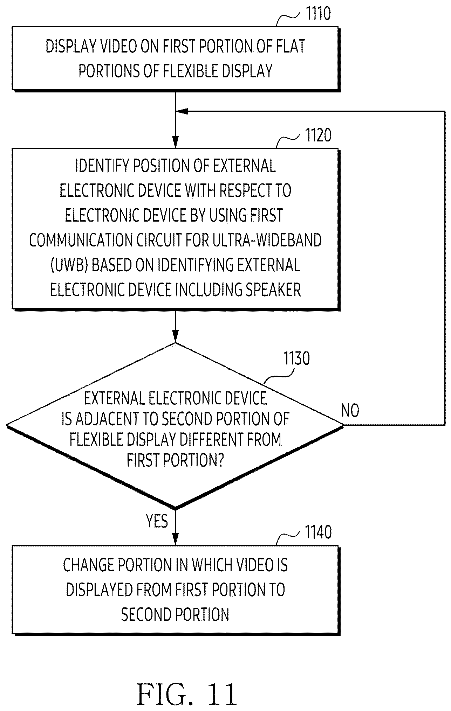

The electronic device 101 according to an embodiment may identify a position of the external electronic device 170 with respect to the electronic device 101 while playing an audio signal using the external electronic device 170. In a case that the external electronic device 170 is wearable by the user, the position of the external electronic device 170 may correspond to a position of the user. For example, the electronic device 101 may identify the position of the user by using the position of the external electronic device 170. In a case that the flat portions of the flexible display 150 are directed to different directions from each other, such as the second state 192 and/or the third state 193, the electronic device 101 may identify any one plane of the flexible display 150 viewed from the position of the external electronic device 170 with respect to the electronic device 101. The electronic device 101 may provide an audio signal corresponding to the identified plane to the external electronic device 170. An operation of the electronic device 101 that changes an audio signal transmitted to the external electronic device 170 based on a relative position of the external electronic device 170 with respect to the electronic device 101 will be described with reference to FIGS. 3 to 9 and/or 12. An embodiment is not limited thereto, and an operation of the electronic device 101 that changes a position and/or a size of a video displayed through the flexible display 150 based on the position will be described with reference to FIGS. 10A to 10B and/or FIG. 11.

As described above, the electronic device 101 according to an embodiment may identify the position of the user using the external electronic device 170 and/or the external electronic device 170, and determine an audio signal to be transmitted to the external electronic device 170 based on the identified position. Since an audio signal (or an audio source) is dynamically changed based on the position of the external electronic device 170 with respect to the electronic device 101, the electronic device 101 may provide a user experience associated with a video viewed through one plane of the planes of the flexible display 150 that is visible to the user. In order to identify the position of the external electronic device 170 with respect to the electronic device 101, the electronic device 101 may execute a function for tracking the user based on an ultra-wideband (UWB) and/or a camera.

Hereinafter, according to an embodiment, the hardware included in the electronic device 101 and/or the software application executed by the hardware will be described with reference to FIG. 2.

FIG. 2 illustrates an example of a block diagram of an electronic device 101 according to an embodiment. The electronic device 101 of FIG. 1 may include hardware of the electronic device 101 described with reference to FIG. 2. Referring to FIG. 2, the electronic device 101 according to an embodiment may include at least one of a processor 210, memory 220, a flexible display 150, a sensor 230, or communication circuitry 240. The processor 210, the memory 220, the flexible display 150, the sensor 230, and the communication circuitry 240 may be electrically and/or operably coupled with each other by an electronic component such as a communication bus 202.

In an embodiment, hardware of the electronic device 101 operably being coupled may mean that a direct connection, or an indirect connection between the hardware is established by wire or wirelessly so that second hardware is controlled by first hardware among the hardware. Even though illustrated based on different blocks, an embodiment is not limited thereto, and some of the hardware of FIG. 2 (e.g., the processor 210, the memory 220, and the communication circuitry 240) may be included in a single integrated circuit such as a system on a chip (SoC). The hardware of the electronic device 101 divided into blocks may be positioned in the first housing 111 to the third housing 113 described with reference to FIG. 1. A type and/or the number of the hardware included in the electronic device 101 is not limited as illustrated in FIG. 2. For example, the electronic device 101 may include only some of the hardware illustrated in FIG. 2.

The processor 210 of the electronic device 101 according to an embodiment may include hardware for processing data based on one or more instructions. The hardware for processing the data may include, for example, an arithmetic and logic unit (ALU), a floating point unit (FPU), a field programmable gate array (FPGA), a central processing unit (CPU), and/or an application processor (AP). The number of the processor 210 may be one or more. For example, the processor 210 may have a structure of a multi-core processor such as a dual core, a quad core, or a hexa core.

The memory 220 of the electronic device 101 according to an embodiment may include a hardware component for storing data and/or an instruction inputted to and/or outputted from the processor 210. The memory 220 may include, for example, volatile memory such as random-access memory (RAM) and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include at least one of, for example, programmable ROM (PROM), erasable PROM (EPROM), electrically erasable PROM (EEPROM), flash memory, a hard disk, a compact disk, a solid state drive (SSD), and an embedded multi-media card (eMMC).

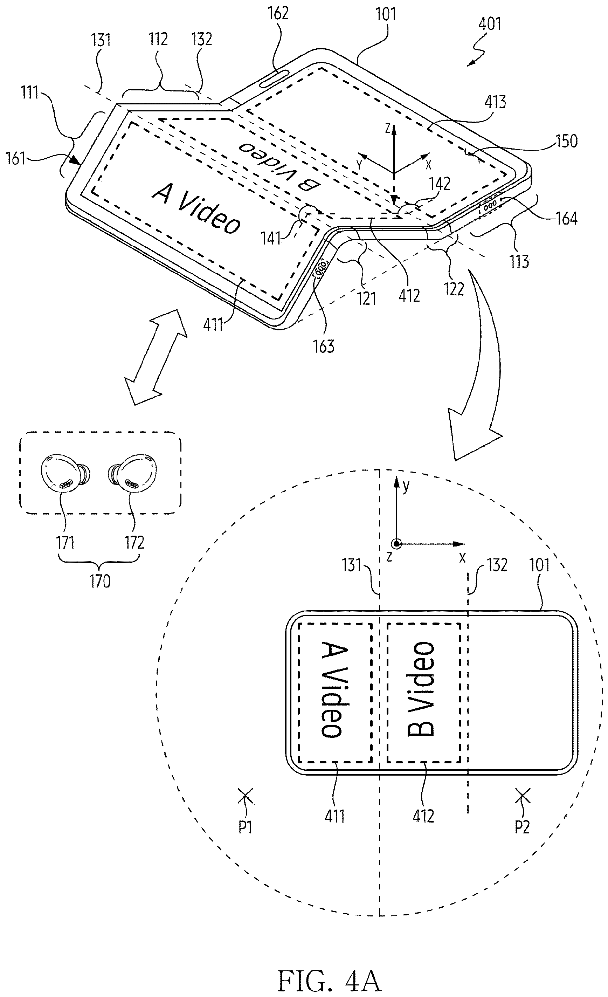

The flexible display 150 of the electronic device 101 according to an embodiment may output visualized information (e.g., a screen of FIGS. 4A to 10B) to a user. For example, the flexible display 150 may output the visualized information to the user by being controlled by a controller such as a graphic processing unit (GPU) and/or the processor 210. The flexible display 150 may include a liquid crystal display (LCD), a plasma display panel (PDP), and/or one or more light emitting diodes (LEDs). The LED may include an organic LED (OLED). The flexible display 150 may include electronic paper. As described above with reference to FIG. 1, the flexible display 150 may have at least a partially curved form and/or a deformable form.

The flexible display 150 of the electronic device 101 according to an embodiment may include a sensor (e.g., a touch sensor panel (TSP)) for detecting an external object (e.g., a finger of the user) on the flexible display 150. For example, based on the TSP, the electronic device 101 may detect an external object that contacts with the flexible display 150 or is floating on the flexible display 150. In response to detecting the external object, the electronic device 101 may execute a function associated with a specific visual object corresponding to a position of the external object on the flexible display 150 among visual objects being displayed in the flexible display 150.

The sensor 230 of the electronic device 101 according to an embodiment may generate electronic information that may be processed by the processor 210 and/or the memory 220 from non-electronic information associated with the electronic device 101. For example, the sensor 230 may include a global positioning system (GPS) sensor for detecting a geographic location of the electronic device 101. In addition to the GPS method, for example, the sensor 230 may generate information indicating the geographic location of the electronic device 101 based on a global navigation satellite system (GNSS) such as Galileo and Beidou (compass). The information may be stored in the memory 220, processed by the processor 210, and/or transmitted to another electronic device distinct from the electronic device 101 through the communication circuitry 240. The sensor 230 is not limited to those described above, and may include an image sensor, an illumination sensor, a proximity sensor, a grip sensor, and/or a ToF sensor for detecting an electromagnetic wave including light.

In an embodiment, the processor 210 of the electronic device 101 may identify a posture, a form, and/or a direction of the electronic device 101 by using the sensor 230. The sensor 230 may include a Hall sensor and/or an inertial measurement unit (IMU) for identifying the posture, the form, and/or the direction of the electronic device 101. The Hall sensor may include a magnet and a magnetic field sensor that measures a change in a magnetic field formed by the magnet. The magnet and the magnetic field sensor may be disposed on different portions of a housing of the electronic device 101. Based on the change in the magnetic field measured by the magnetic field sensor, the Hall sensor may output sensor data indicating a distance between the portions. In an embodiment in which the electronic device 101 includes a deformable housing (e.g., the first housing 111, the second housing 112, and/or the third housing 113 of FIG. 1), the processor 210 of the electronic device 101 may identify a form of the housing or identify a parameter (e.g., the first angle 141 and/or the second angle 142 of FIG. 1) associated with the form by using the magnet disposed in the different portions of the housing and the Hall sensor including the magnetic field sensor. For example, the Hall sensor may output sensor data indicating the distance and/or the form of the housing.

The IMU according to an embodiment may include an acceleration sensor, a gyro sensor, a geomagnetic sensor, or any combination thereof. The acceleration sensor may output an electrical signal indicating gravitational acceleration and/or acceleration of each of a plurality of axes (e.g., an x-axis, a y-axis, and a z-axis) perpendicular to each other. The gyro sensor may output an electrical signal indicating an angular velocity (e.g., an angular velocity based on a roll, a pitch, and/or a yaw) of each of the plurality of axes. The geomagnetic sensor may output an electric signal indicating magnitude of a magnetic field formed in the electronic device 101 along each of the plurality of axes (e.g., the x-axis, the y-axis, and/or the z-axis). The processor 210 may repeatedly obtain data indicating acceleration, an angular velocity, and/or magnitude of a magnetic field from the IMU based on a preset period (e.g., 1 millisecond). By using the Hall sensor and/or the IMU, the processor 210 may identify parameters (e.g., the first angle 141 and/or the second angle 142 of FIG. 1) associated with the form of the electronic device 101. Based on the parameters, the processor 210 may identify a current form of the electronic device 101 among preset forms (e.g., an unfolded state, a bidirectional flex state, and/or a tridirectional flex state) for distinguishing the form of the electronic device 101.

The communication circuitry 240 of the electronic device 101 according to an embodiment may include hardware for supporting transmission and/or reception of an electrical signal between the electronic device 101 and an external electronic device 170. The communication circuitry 240 may include at least one of, for example, a MODEM, an antenna, and an optic/electronic (O/E) converter. The communication circuitry 240 may support the transmission and/or the reception of the electrical signal based on various types of protocols such as Ethernet, a local area network (LAN), a wide area network (WAN), a wireless fidelity (WiFi), near field communication (NFC), Bluetooth, Bluetooth low energy (BLE), ZigBee, a long term evolution (LTE), a 5G new radio (NR), and/or 6G. Even though the external electronic device 170 that is an example of a wireless earphone (or an earbud) is exemplarily illustrated, a type of the external electronic device 170 that the electronic device 101 may access through the communication circuitry 240 is not limited to the wireless earphone. For example, the processor 210 of the electronic device 101 may communicate with an external electronic device such as a smartwatch, a laptop, a desktop, and/or a tablet PC through the communication circuitry 240.

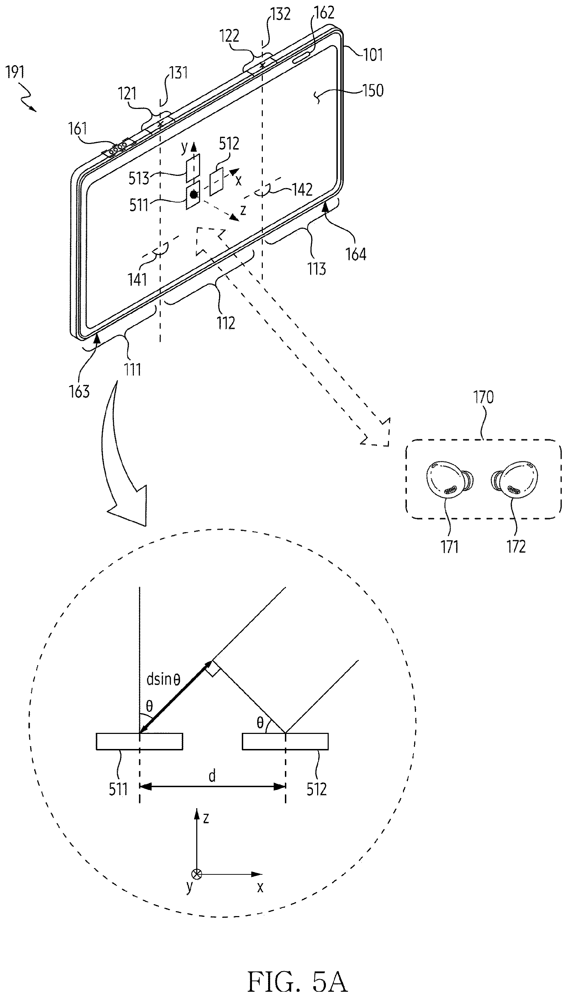

Referring to FIG. 2, the communication circuitry 240 included in the electronic device 101 may be divided into an ultra-wideband (UWB) communication circuit 242 and/or a Bluetooth communication circuit 246 according to a communication protocol. By using the UWB communication circuit 242, the electronic device 101 may transmit or receive a wireless signal in a frequency range between approximately 6.5 GHz and approximately 8 GHz. By using the UWB communication circuit 242, the processor 210 of the electronic device 101 may identify a position and/or a direction of the external electronic device 170 with respect to the electronic device 101. An operation of the processor 210 identifying a relative position of the external electronic device 170 with respect to the electronic device 101 by using the UWB communication circuit 242 will be described with reference to FIGS. 5A to 5B. By using the Bluetooth communication circuit 246, the electronic device 101 may perform communication based on the Bluetooth and/or the Bluetooth low-energy (BLE). By using the Bluetooth communication circuit 246, the electronic device 101 may establish a communication link with the external electronic device 170. Through the communication link, the electronic device 101 may wirelessly transmit an audio signal to the external electronic device 170. The electronic device 101 being paired to the external electronic device 170 may mean that the communication link between the electronic device 101 and the external electronic device 170 is established by using the Bluetooth communication circuit 246. In an embodiment, the UWB communication circuit 242 may be referred to as a first communication circuit, and the Bluetooth communication circuit 246 may be referred to as a second communication circuit.

Even though not illustrated, the electronic device 101 according to an embodiment may include an output means for outputting information in another form other than a visualized form. For example, the electronic device 101 may include a motor for providing haptic feedback based on a vibration.

In the memory 220 of the electronic device 101 according to an embodiment, one or more instructions (or commands) indicating a calculation and/or an operation to be performed by the processor 210 on data may be stored. A set of one or more instructions may be referred to as firmware, an operating system, a process, a routine, a sub-routine, and/or an application. For example, when a set of a plurality of instructions distributed in a form of an operating system, firmware, a driver, and/or an application are executed, the electronic device 101 and/or the processor 210 may perform at least one of operations of FIG. 3, and FIGS. 11 to 12. Hereinafter, an application being installed in the electronic device 101 may mean that one or more instructions provided in a form of an application are stored in the memory 220 of the electronic device 101, and that the one or more applications are stored in a format (e.g., a file having an extension preset by an operating system of the electronic device 101) executable by the processor 210 of the electronic device 101.

Referring to FIG. 2, programs stored in the memory 220 are illustrated as different blocks. For example, the processor 210 may execute at least one of a video output 222 and/or an audio output 224. Based on the execution of the video output 222, the processor 210 may display a video on at least a portion of the flexible display 150. For example, the electronic device 101 may display a video on at least one of flat portions of the flexible display 150 identified based on the sensor 230. The electronic device 101 may display each of a plurality of videos on the portions. For example, the processor 210 may display the plurality of videos on each of the flat portions of the flexible display 150 divided by an angle (e.g., the first angle 141 and/or the second angle 142 of FIG. 1) at which the flexible display 150 is bent.

In an embodiment, in a state of displaying the plurality of videos through different portions of the flexible display 150, the processor 210 may identify an audio signal to be transmitted to the external electronic device 170 among audio signals corresponding to the plurality of videos based on the execution of the audio output 224. Based on identifying the external electronic device 170 including a speaker, the processor 210 may identify the position of the external electronic device 170 with respect to the electronic device 101 by using the UWB communication circuit 242. By using the audio output 224, the processor 210 may transmit an audio signal identified based on the position among the audio signals to the external electronic device 170 through the Bluetooth communication circuit 246.

As described above, the electronic device 101 according to an embodiment may simultaneously play the plurality of videos. While simultaneously playing the plurality of videos, the electronic device 101 may determine the audio signal to be transmitted to the external electronic device 170 among the audio signals corresponding to the plurality of videos by executing a positioning function with respect to the external electronic device 170. The processor 210 may execute the positioning function by using the UWB communication circuit 242. An embodiment is not limited thereto, and the processor 210 may identify the position of the external electronic device 170 with respect to the electronic device 101 by executing camera-based object recognition. The object recognition may include an operation of inferring a position of the external electronic device 170 and/or a face of the user wearing the external electronic device 170 based on an image and/or a video obtained from the camera. The processor 210 may not only communicate directly with the external electronic device 170 including the speaker, but also identify the position of the external electronic device 170 based on data of another electronic device (e.g., a smartwatch) worn by the user wearing the external electronic device 170.

In an embodiment, since the audio signal to be transmitted to the external electronic device 170 is determined based on the position of the external electronic device 170, the electronic device 101 may transmit an audio signal (e.g., an audio signal corresponding to a video displayed in any one portion of portions of the flexible display 150 toward the position of the external electronic device 170) suitable for the position of the external electronic device 170, to the external electronic device 170.

Hereinafter, an operation of the electronic device 101 that determines the audio signal to be transmitted to the external electronic device 170 based on the positioning function will be described with reference to FIG. 3.

FIG. 3 illustrates an example of a flowchart of an electronic device according to an embodiment. The electronic device 101 of FIGS. 1 to 2 and/or the processor 210 of FIG. 2 may perform at least one of the operations of FIG. 3.

In the following embodiment, each of the operations may be sequentially performed, but is not necessarily performed sequentially. For example, an order of each of the operations may be changed, and at least two operations may be performed in parallel.

Referring to FIG. 3, in operation 310, a processor of the electronic device according to an embodiment may identify an external electronic device (e.g., the external electronic device 170 of FIG. 1) including a speaker. The processor may identify the external electronic device by using the Bluetooth communication circuit 246 of FIG. 2. The operation 310 may be performed while a flexible display 150 is at least partially folded, such as the second state 192 and/or the third state 193 of FIG. 1. While the flexible display 150 is folded, the processor may play a video on any one of flat portions of the flexible display 150. While the flexible display 150 is folded, the processor may display each of a plurality of videos on respective flat portions of the flexible display 150. The operation 310 may be performed in a state of displaying a video on at least a portion of the flexible display 150 of FIG. 1. Based on identifying the external electronic device of the operation 310, the processor may perform other operations of FIG. 3 to identify an audio signal to be transmitted to the external electronic device.

Referring to FIG. 3, in operation 320, the processor of the electronic device according to an embodiment may identify movement of a user wearing the external electronic device and/or the external electronic device. For example, the processor may identify a relative position of the external electronic device with respect to the electronic device. For example, the processor may identify whether the external electronic device is moved. The processor may identify the movement of the user wearing the external electronic device and/or the external electronic device by using a proximity sensor, a grip sensor, an ultrasonic sensor, a camera, and/or the Bluetooth communication circuit 246 of FIG. 2.

Referring to FIG. 3, in operation 330, the processor of the electronic device according to an embodiment may identify a position of the external electronic device with respect to the electronic device by using the UWB communication circuit 242 of FIG. 2. For example, based on identifying the movement of the external electronic device by using the Bluetooth communication circuit 246 of FIG. 2, the processor may execute a positioning function based on the UWB communication circuit 242 of FIG. 2 by performing the operation 330. In the example, the processor may maintain the UWB communication circuit 242 in a deactivated state in a second time duration different from a first time duration in which the operation 330 is performed. Since the UWB communication circuit 242 is switched to an activated state only in the first time duration, the processor may reduce power consumption of the UWB communication circuit 242. Based on the operation 330, the processor may identify a detailed position of the external electronic device with respect to the electronic device.

Referring to FIG. 3, in operation 340, the processor of the electronic device according to an embodiment may identify whether the external electronic device has been moved from a first external space to a second external space, which are divided by a folding axis (e.g., the first folding axis 131 and/or the second folding axis 132 of FIG. 1) of the electronic device. In a case that a flexible display of the electronic device is folded by the folding axis, each of the flat portions of the flexible display divided by the folding axis may be directed to the first external space and the second external space, respectively. The first external space and the second external space divided by the folding axis will be exemplarily described in FIGS. 4A to 4B, FIGS. 6 to 9, and FIGS. 10A to 10B. The processor may identify the first external space and/or the second external space of the operation 340 based on at least one of the position of the external electronic device identified based on the operation 330, a posture, a form, and/or a direction of the electronic device identified by a Hall sensor and/or an IMU. In a case that the external electronic device has been moved from the first external space to the second external space (340-YES), the processor may perform operation 350. Before the external electronic device is moved from the first external space to the second external space, or in a case that the external electronic device remains in the first external space (340-NO), the processor may maintain tracking of the external electronic device based on the operation 320.

Referring to FIG. 3, in the operation 350, the processor of the electronic device according to an embodiment may adjust a position of a video displayed on the flexible display, adjust a volume of the external electronic device, and/or change an audio signal to be transmitted to the external electronic device. For example, in a case that the external electronic device is moved from the first external space to the second external space while displaying a video on a portion, which is directed to the first external space, of the flexible display, the processor may move the video to a portion, which is directed to the second external space, of the flexible display. For example, the processor may reduce a volume of the audio signal transmitted to the external electronic device based on identifying the external electronic device moved to the second external space. For example, the processor may determine the audio signal transmitted to the external electronic device among audio signals corresponding to videos displayed through different portions of the flexible display based on identifying the external electronic device moved to the second external space. The processor may display a visual object and/or a screen for determining an audio signal to be transmitted to the external electronic device among the audio signals based on identifying the external electronic device moved to the second external space.

As described above, the processor of the electronic device according to an embodiment may identify the external electronic device in a state of being capable of playing a plurality of audio signals (e.g., a state of simultaneously playing videos corresponding to the plurality of audio signals). The processor identifying the external electronic device may identify a state, a position, and/or movement of the external electronic device. Based on the state, the position, and/or the movement of the external electronic device, the processor may determine, among the plurality of audio signals, an audio signal to be transmitted to the external electronic device. The processor may transmit the determined audio signal to the external electronic device through a communication link (e.g., a communication link established based on Bluetooth).

Hereinafter, an exemplary operation of the electronic device transmitting the audio signal to the external electronic device based on the operation of FIG. 3 will be described with reference to FIGS. 4A to 4B.

FIGS. 4A to 4B exemplarily illustrate different states 401 and 402 of an electronic device 101 according to an embodiment. The electronic device 101 of FIGS. 1 to 2 and/or the processor 210 of FIG. 2 may perform an operation of the electronic device 101 of FIGS. 4A to 4B. The operation of the electronic device 101 described with reference to FIGS. 4A to 4B may be associated with the operations of FIG. 3.

Referring to FIG. 4A, an exemplary state 401 of the electronic device 101 included in a bidirectional flex state is illustrated. The electronic device 101 according to an embodiment may identify a first angle 141 and/or a second angle 142 by using one or more sensors. In a case that any one angle of the first angle 141 and the second angle 142 is included in an angle range (e.g., an angle range exceeding approximately 180 ° and less than approximately 360 °) exceeding a straight angle, and another angle is included in an angle range (e.g., an angle range less than approximately 180 ° and exceeding approximately 90 °) less than the straight angle, the electronic device 101 may identify the bidirectional flex state. In the bidirectional flex state, the electronic device 101 may identify different planes 411, 412, and 413 of a flexible display 150 divided by a first folding axis 131 and a second folding axis 132.

In the exemplary state 401 of FIG. 4A, the electronic device 101 may identify a direction of gravity applied to the electronic device 101. For example, in a case that the electronic device 101 is supported by a third housing 113 (or in a case of being placed on an x-y plane), the electronic device 101 may identify a direction of gravity applied in a -z direction. In the state 401 in which the direction of the gravity applied in the -z direction is identified, the electronic device 101 may display at least one video on the planes 411 and 412 different from the plane 413 of the flexible display 150 disposed on the third housing 113 substantially perpendicular to the -z direction. For example, in a case of displaying two videos, the electronic device 101 may display the videos on each of the planes 411 and 412. Based on different directions of the planes 411 and 412, the electronic device 101 may determine orientations of the videos displayed on the planes 411 and 412.

Referring to FIG. 4A, the electronic device 101 may identify an external electronic device 170 in the state 401 in which a plurality of videos are displayed. The electronic device 101 identifying the external electronic device 170 may transmit, to the external electronic device 170, an audio signal corresponding to a video displayed on any one plane adjacent to the external electronic device 170, among the different planes 411 and 412 of the flexible display 150. In order to identify the plane adjacent to the external electronic device 170, the electronic device 101 may identify a position of the external electronic device 170 with respect to the electronic device 101.

In an embodiment, in order to identify the position of the external electronic device 170, the electronic device 101 may activate a UWB communication circuit (e.g., the UWB communication circuit 242 of FIG. 2). For example, before identifying the external electronic device 170, the electronic device 101 may maintain the UWB communication circuit in a deactivated state. Based on identifying the external electronic device 170 while displaying the plurality of videos in the bidirectional flex state (e.g., the state 401 of FIG. 4A), the electronic device 101 may switch the UWB communication circuit to an activated state and identify the position of the external electronic device 170 by using the UWB communication circuit.

In an embodiment, the electronic device 101 may initiate identifying the position of the external electronic device 170 by activating the UWB communication circuit based on a signal (e.g., a signal indicating movement of another external electronic device) transmitted from the other external electronic device including a gyro sensor and/or a geomagnetic sensor, such as a smartwatch. By conditionally activating the UWB communication circuit, the electronic device 101 may reduce power consumption consumed by the UWB communication circuit and reduce heat generated by the UWB communication circuit.

In an embodiment, the electronic device 101 may identify movement of a user by using a camera, an ultrasonic sensor, a grip sensor, and/or a proximity sensor. For example, by using a neural network such as a convolutional neural network (CNN), the electronic device 101 may obtain data associated with a position of the user from an image and/or a video of the camera. Based on the data, the electronic device 101 identifying the movement of the user may identify the position of the external electronic device 170 by activating the UWB communication circuit. The electronic device 101 may cut down the power consumption of the UWB communication circuit by conditionally activating the UWB communication circuit using the camera, the ultrasonic sensor, the grip sensor, and/or the proximity sensor.

Referring to FIG. 4A, the electronic device 101 according to an embodiment may determine an audio signal to be transmitted to the external electronic device 170 based on external spaces divided by a folding axis. In the state 401 in which a A video is displayed on the plane 411 of the flexible display 150 disposed on a first housing 111 and a B video is displayed on the plane 412 of the flexible display 150 disposed on a second housing 112, the electronic device 101 may identify an external space in which the external electronic device 170 is positioned among external spaces divided by the first folding axis 131 in a first hinge assembly 121 connecting the first housing 111 and the second housing 112. Referring to FIG. 4A, in a case that the external electronic device 170 is positioned at a point P1, the electronic device 101 may determine that the external electronic device 170 is positioned in an external space adjacent to the plane 411, among the external spaces divided by the first folding axis 131. In a case that the external electronic device 170 is positioned at a point P2, the electronic device 101 may determine that the external electronic device 170 is positioned in an external space adjacent to the plane 412 among the external spaces.

In the state 401 of FIG. 4A, the electronic device 101 identifying the external electronic device 170 that is moved between the external spaces divided by the first folding axis 131 may execute a function for changing the audio signal to be transmitted to the external electronic device 170. For example, the electronic device 101 identifying the external electronic device 170 that is moved from the point P1 to the point P2 may perform an operation to transmit an audio signal corresponding to the B video displayed through the plane 412 adjacent to the point P2 to the external electronic device 170. The operation may include an operation of displaying a visual object and/or a screen guiding a change in the audio signal to be transmitted to the external electronic device 170 on the flexible display 150.

For example, while transmitting the audio signal corresponding to the B video to the external electronic device 170 positioned at the point P2, the user wearing the external electronic device 170 may move from the point P2 to the point P1. The electronic device 101 identifying the external electronic device 170 that is moved from the point P2 to the point P1 may cease transmitting the audio signal corresponding to the B video to the external electronic device 170, and transmit an audio signal corresponding to the A video displayed through the plane 411 adjacent to the point P1 to the external electronic device 170. An embodiment is not limited thereto, and the electronic device 101 identifying the external electronic device 170 that is moved from the point P2 to the point P1 may display the visual object and/or the screen for changing the audio signal to be transmitted to the external electronic device 170.

The electronic device 101 according to an embodiment may identify the position of the external electronic device 170 with respect to the electronic device 101 based on an azimuth angle of the external electronic device 170 identified by using the UWB communication circuit and a state (e.g., the bidirectional flex state illustrated in FIG. 4A) of the electronic device 101. The position of the external electronic device 170 identified by the electronic device 101 may have three-dimensional coordinate values x, y, and z based on a Cartesian coordinate system. An embodiment is not limited thereto, and the electronic device 101 may obtain three-dimensional coordinate values r, Φ, and Θ based on a spherical coordinate system. The electronic device 101 may obtain three-dimensional coordinate values r, Θ, and z based on a cylindrical coordinate system.

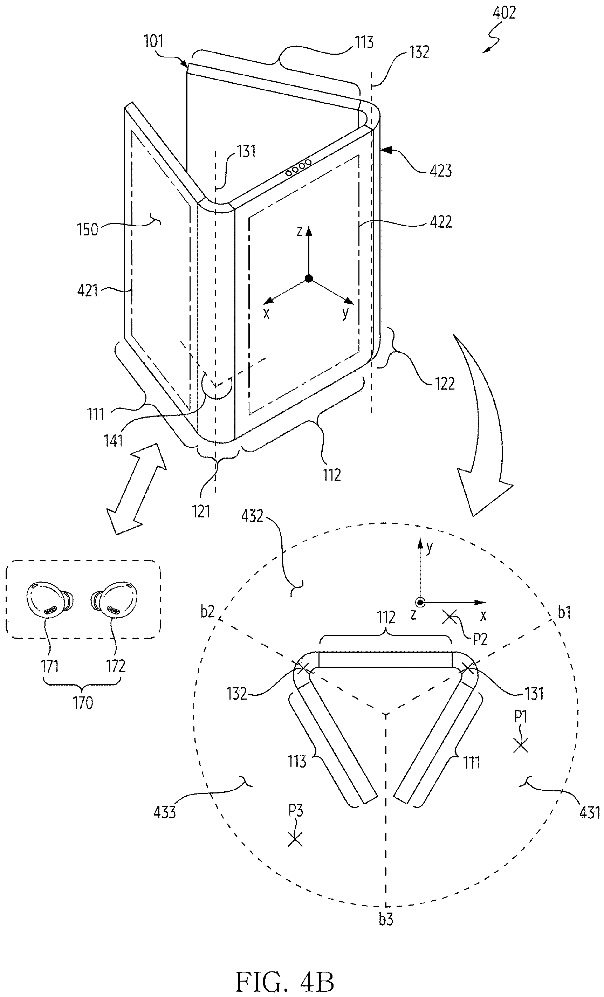

Referring to FIG. 4B, an exemplary state 402 of the electronic device 101 included in a tridirectional flex state is illustrated. In a case of identify the first angle 141 and the second angle 142 included in an angle range (e.g., an angle range exceeding approximately 180 ° and less than approximately 300 °) exceeding the straight angle by using one or more sensors, the electronic device 101 according to an embodiment may determine that the state of the electronic device 101 is included in the tridirectional flex state. In the tridirectional flex state, the electronic device 101 may identify three planes 421, 422, and 423 of the flexible display 150 divided by the first folding axis 131 and the second folding axis 132.

In the exemplary state 402 of FIG. 4B, the electronic device 101 may be erected by a side surface connected to a front surface of the electronic device 101 on which the flexible display 150 is disposed. For example, the side surface may be in contact with ground. In the state 402 supported by the side surface, the electronic device 101 may identify that the electronic device 101 is supported by the side surface based on the direction of the gravity applied in the -z direction. In the state 402 of FIG. 4B, the electronic device 101 may simultaneously display up to three videos by using each of the planes 421, 422, and 423.

Referring to FIG. 4B, the electronic device 101 may identify the external electronic device 170 in the state 402 in which a plurality of videos are displayed. The electronic device 101 identifying the external electronic device 170 may transmit an audio signal corresponding to a video displayed on any one plane adjacent to the external electronic device 170 among the different planes 421, 422, and 423 of the flexible display 150, to the external electronic device 170. Based on the operation described with reference to FIG. 3 and/or 4A, the electronic device 101 may identify the position and/or the azimuth angle of the external electronic device 170 with respect to the electronic device 101.

Referring to FIG. 4B, the electronic device 101 according to an embodiment may determine an audio signal to be transmitted to the external electronic device 170 based on external spaces 431, 432, and 433 divided by the folding axes. In the exemplary state 402 of FIG. 4B, an external space including the electronic device 101 may be divided into the first external space 431 to the third external space 433 by a boundary line b1 including the first folding axis 131, a boundary line b2 including the second folding axis 132, and a boundary line b3 formed between the first housing 111 and the third housing 113. The plane 421 of the flexible display 150 disposed on the first housing 111 may be directed to the first external space 431. The plane 422 of the flexible display 150 disposed on the second housing 112 may be directed to the second external space 432. The plane 423 of the flexible display 150 disposed on the third housing 113 may be directed to the third external space 433.

Referring to FIG. 4B, the electronic device 101 according to an embodiment may identify an external space including the external electronic device 170 among the first external space 431 to the third external space 433, based on parameters (e.g., the first angle 141 and/or the second angle 142 and a position and/or a direction of at least one of the first housing 111 to the third housing 113) used to identify the state (e.g., the tridirectional flex state) of the electronic device 101, and the position of the external electronic device 170 with respect to the electronic device 101. Based on the identified external space, the electronic device 101 may determine whether to change the audio signal to be transmitted to the external electronic device 170.

For example, the electronic device 101 identifying the external electronic device 170 positioned at the point P1 in the first external space 431 may transmit an audio signal corresponding to a video displayed on the plane 421 on the first housing 111 associated with the first external space 431 to the external electronic device 170. In the example, in a case that the external electronic device 170 moves beyond the first folding axis 131 (or the boundary line b1) to the point P2 in the second external space 432, the electronic device 101 may change the audio signal to be transmitted to the external electronic device 170 into an audio signal corresponding to a video displayed through the plane 422 associated with the second external space 432. In the example, in a case that the external electronic device 170 moves beyond the second folding axis 132 (or the boundary line b2) to a point P3 in the third external space 433, the electronic device 101 may change the audio signal to be transmitted to the external electronic device 170 into an audio signal corresponding to a video displayed through the plane 423 associated with the third external space 433. In the example, the electronic device 101 identifying the external electronic device 170 that moves to the point P1 in the first external space 431 by passing through the boundary line b3 may change the audio signal to be transmitted to the external electronic device 170 into the audio signal corresponding to the video displayed through the plane 421. Even though the movement of the external electronic device 170 that is sequentially moved from the first external space 431 to the second external space 432 and the third external space 432 is exemplarily described, an embodiment is not limited thereto.

As described above, the electronic device 101 according to an embodiment may transmit an audio signal corresponding to a video displayed in any one portion adjacent to the external electronic device 170 among different portions (e.g., the planes 421, 422, and 423 of FIG. 4B) of the flexible display 150 to the external electronic device 170. In a case that the portion adjacent to the external electronic device 170 is changed as the external electronic device 170 is moved, the electronic device 101 may identify the portion adjacent to the external electronic device 170 again and change the audio signal transmitted to the external electronic device 170.

Hereinafter, an operation of the electronic device 101 that identifies the position of the external electronic device 170 with respect to the electronic device 101 by using the UWB communication circuit will be described with reference to FIGS. 5A to 5B.

FIGS. 5A to 5B illustrate an example of an operation of an electronic device 101 that identifies an external electronic device 170 by using a wireless signal of a UWB. The electronic device 101 of FIGS. 1 to 2 and/or the processor 210 of FIG. 2 may perform the operation of an electronic device 101 of FIGS. 5A to 5B. The operation of the electronic device 101 described with reference to FIGS. 5A to 5B may be associated with the operations of FIG. 3.

Referring to FIG. 5A, the electronic device 101 according to an embodiment may include antennas 511, 512, and 513 which are electrically connected to a UWB communication circuit (e.g., the UWB communication circuit 242 of FIG. 2) and having positions spaced apart from each other. The antennas 511, 512, and 513 may have a form of a patch antenna. In terms of transmitting or receiving the wireless signal of the UWB, the antennas 511, 512, and 513 may be referred to as UWB antennas. Referring to FIG. 5A, an example of the antennas 511, 512, and 513 disposed in a second housing 112 is illustrated. For example, the antennas 511, 512, and 513 may be disposed toward a rear surface opposite to a front surface of the electronic device 101 on which a flexible display 150 is disposed. The antennas 511 and 512 may be disposed at positions spaced apart by a distance d along an x-axis of the second housing 112. The antennas 511 and 513 may be disposed at positions spaced apart by the distance d along a y-axis of the second housing 112. A size, magnitude, and/or a position of the antennas 511, 512, and 513 are not limited to an example illustrated in FIG. 5A.

The electronic device 101 according to an embodiment may receive the wireless signal of the UWB from the external electronic device 170 by using the antennas 511, 512, and 513. Referring to FIG. 5A, in a case that the wireless signal of the UWB is incident on the antennas 511 and 512 in a direction inclined by an angle of Θ in an x-z plane, phases of the wireless signal identified by each of the antennas 511 and 512 may have a difference of d X sin Θ. The electronic device 101 according to an embodiment may identify the incident angle Θ of the wireless signal based on phase differences of the wireless signal. The incident angle Θ may be referred to as an angle of arrival (AOA). The electronic device 101 according to an embodiment may identify a first incident angle Θ in the x-z plane by using the antennas 511 and 512 disposed along the x-axis. The electronic device 101 may identify a second incident angle of the wireless signal in a y-z plane by using the antennas 511 and 513 disposed along the y-axis. By using the first incident angle and the second incident angle, the electronic device 101 may identify an azimuth angle of the external electronic device 170 in three dimensions. For example, the electronic device 101 may identify a position of the external electronic device 170 with respect to the electronic device 101 based on phase differences of the wireless signal identified in each of the antennas 511, 512, and 513.

The electronic device 101 according to an embodiment may identify a distance between the electronic device 101 and the external electronic device 170 based on an intensity of the wireless signal of the UWB received through at least one of the antennas 511, 512, and 513. For example, in a case that the external electronic device 170 transmits a wireless signal of a preset intensity, the intensity of the wireless signal received through the antennas 511, 512, and 513 may be reduced in inverse proportion to the distance between the electronic device 101 and the external electronic device 170. The electronic device 101 may identify the distance between the electronic device 101 and the external electronic device 170 based on a degree to which the intensity of the wireless signal is decreased. By using the first incident angle, the second incident angle, and the intensity of the wireless signal, the electronic device 101 may identify three-dimensional coordinate values (e.g., x, y, and z) indicating a position of the external electronic device 170 in an external space.

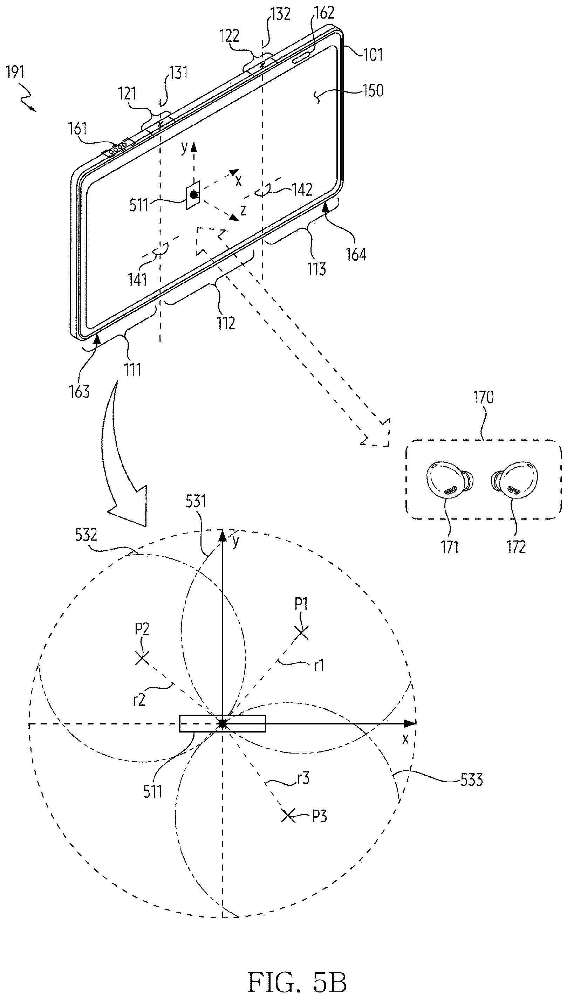

Referring to FIG. 5B, the electronic device 101 may identify the position of the external electronic device 170 with respect to the electronic device 101 based on trilateration. For example, in a case that the antenna 511 of the electronic device 101 is positioned at an origin point, while the external electronic device 170 moves to different points P1, P2, and P3, the electronic device 101 may identify distances r1, r2, and r3 between the electronic device 101 and the external electronic device 170 at each of the points P1, P2, and P3. Referring to FIG. 5B, the position of the antenna 511 may be matched to an intersection of a circle 531 formed around the point P1 and having a radius of the distance r1, a circle 532 formed around the point P2 and having a radius of the distance r2, and a circle 533 formed around the point P3 and having a radius of the distance r3. The electronic device 101 may identify a relative position of the external electronic device 170 with respect to the electronic device 101 based on a relationship between the intersection of the circles 531, 532, and 533 and the position of the antenna 511. Based on the distances r1, r2, and r3, the electronic device 101 may identify an angle of the external electronic device 170 with respect to the electronic device 101 at each of the points P1, P2, and P3. By using the angle, the electronic device 101 may change an audio signal to be transmitted to the external electronic device 170.

Referring to FIG. 5B, the electronic device 101 according to an embodiment may perform the trilateration by using the antenna 511. For example, in an embodiment of identifying the position of the external electronic device 170 based on the trilateration, the electronic device 101 may use only the antenna 511, unlike an embodiment of FIG. 5A including the plurality of antennas 511, 512, and 513. Since the only antenna 511 is required to identify the external electronic device 170, another antenna (e.g., the antennas 512 and 513 of FIG. 5A) for the UWB may be removed and/or deactivated in the electronic device 101. Since the electronic device 101 includes the antenna 511 for the UWB, the electronic device 101 may be further miniaturized.

As described above, the electronic device 101 according to an embodiment may obtain data indicating the relative position of the external electronic device 170 with respect to the electronic device 101 by using the wireless signal of the UWB. The data may include phases (or differences of the phases) of the wireless signal received from at least two antennas among the antennas 511, 512, and 513, the intensity of the wireless signal, and/or an angle of arrival of the wireless signal. The electronic device 101 may identify a portion viewed from the position among flat portions of the flexible display 150 by using the position of the external electronic device 170. The electronic device 101 may transmit an audio signal corresponding to the identified portion to the external electronic device 170.

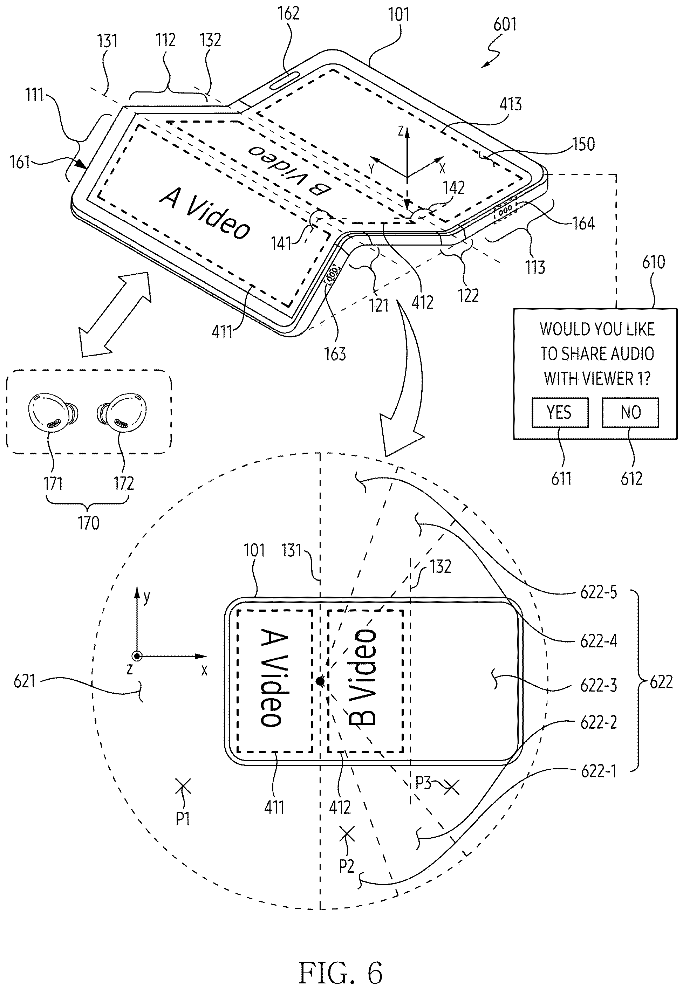

FIG. 6 illustrates an example of an operation of an electronic device 101 that adjusts a volume of an audio signal transmitted to an external electronic device 170 based on a position of the external electronic device 170. The electronic device 101 of FIGS. 1 to 2 and/or the processor 210 of FIG. 2 may perform the operation of the electronic device 101 of FIG. 6. The operation of the electronic device 101 described with reference to FIG. 6 may be associated with the operations of FIG. 3.

Referring to FIG. 6, an exemplary state 601 of the electronic device 101 corresponding to a bidirectional flex state is illustrated. The electronic device 101 may determine that a state of the electronic device 101 is in the bidirectional flex state based on a first angle 141 and a second angle 142 identified by using one or more sensors disposed in a first hinge assembly 121 and/or a second hinge assembly 122. The state 601 of FIG. 6 may correspond to the state 401 of FIG. 4A.

In the exemplary state 601 of FIG. 6, the electronic device 101 according to an embodiment may display videos on planes 411 and 412 of a flexible display 150 divided by a first folding axis 131. The electronic device 101 may transmit any one of audio signals corresponding to the videos to the external electronic device 170 based on identifying the external electronic device 170. The electronic device 101 identifying the external electronic device 170 positioned at a point P1 adjacent to the plane 411 of the flexible display 150 disposed on a first housing 111 may transmit an audio signal corresponding to a A video displayed on the plane 411 to the external electronic device 170.

Referring to FIG. 6, while transmitting the audio signal for the A video displayed on the plane 411 of the flexible display 150, the electronic device 101 may identify the position of the external electronic device 170. While controlling a UWB communication circuit (e.g., the UWB communication circuit 242 of FIG. 2) in a deactivated state, the electronic device 101 may identify whether the external electronic device 170 is moved by using a Bluetooth communication circuit (e.g., the Bluetooth communication circuit 246 of FIG. 2). The electronic device 101 may change the UWB communication circuit to the deactivated state in a case that a battery of the electronic device 101 is less than a preset state of charge (SOC), or that the external electronic device 170 ceases exceeding a preset period. Based on the Bluetooth communication circuit, the electronic device 101 identifying the movement of the external electronic device 170 may switch the UWB communication circuit to an activated state and identify the position of the external electronic device 170 by using the UWB communication circuit. In a case that the SOC of the battery is less than or equal to the preset SOC, the electronic device 101 may maintain the UWB communication circuit in the deactivated state independently of the movement of the external electronic device 170. In a case that the SOC of the battery exceeds the preset SOC or the battery is being charged, the electronic device 101 may identify the position of the external electronic device 170 by using the UWB communication circuit in response to the movement of the external electronic device 170.

In the state 601 of FIG. 6, while the external electronic device 170 moves from the point P1 to the point P2, the electronic device 101 may identify a path of the external electronic device 170 by using the UWB communication circuit. The electronic device 101 may identify the movement of the external electronic device 170 with respect to a first external space 621 and a second external space 622 divided by the first folding axis 131 between the planes 411 and 412 on which the videos are displayed based on the path. For example, the electronic device 101 identifying the external electronic device 170 that is moved from the point P1 in the first external space 621 to the point P2 in the second external space 622 may display a visual object for matching an audio signal to be transmitted to the external electronic device 170 among audio signals on the flexible display 150 based on the position of the external electronic device 170.

Referring to FIG. 6, based on identifying the external electronic device 170 that is moved from the point P1 in the first external space 621 to the point P2 in the second external space 622, the electronic device 101 may display a screen 610 on the flexible display 150 for transmitting an audio signal corresponding to a B video for the second external space 622 to the external electronic device 170. Even though the screen 610 in a form of a pop-up window is exemplarily illustrated, an embodiment is not limited thereto. In the state 601 in which the external electronic device 170 moved to the point P2 in the second external space 622 is identified, the electronic device 101 may display a visual object (e.g., the screen 610) for changing an audio signal on the plane 412, which is directed to the second external space 622.

Referring to FIG. 6, in the screen 610, the electronic device 101 may display text (e.g., "Would you like to share an audio with viewer 1?") that guides transmission of the audio signal corresponding to the B video to the external electronic device 170. The electronic device 101 may display visual objects 611 and 612 for changing the audio signal to be transmitted to the external electronic device 170 in the screen 610. Based on an input indicating selection of the visual object 612, the electronic device 101 may not change the audio signal to be transmitted to the external electronic device 170. Based on an input indicating selection of the visual object 611, the electronic device 101 may change the audio signal to be transmitted to the external electronic device 170 into the audio signal corresponding to the B video. The electronic device 101 according to an embodiment may display the screen 610 for identifying an audio signal to be transmitted to the external electronic device 170 among audio signals based on identifying the external electronic device 170 positioned in the second external space 622 different from the first external space 621 to which the plane 411 is directed.

The electronic device 101 according to an embodiment may adjust a volume of the audio signal transmitted to the external electronic device 170 based on the position of the external electronic device 170 with respect to the electronic device 101 while transmitting the audio signal corresponding to the A video to the external electronic device 170. For example, the electronic device 101 may increase or decrease the volume of the audio signal transmitted to the external electronic device 170 based on a position of the external electronic device 170 with respect to the plane 411. Referring to FIG. 6, in a case of identifying the external electronic device 170 moved to the second external space 622 different from the first external space 621 corresponding to the plane 411 on which the A video is displayed, the electronic device 101 may change the volume of the audio signal transmitted to the external electronic device 170 based on the position of the external electronic device 170 in the second external space 622.

Referring to FIG. 6, the second external space 622 among the first external space 621 and the second external space 622 divided by the first folding axis 131 may be divided into five sub-spaces 622-1, 622-2, 622-3, 622-4, and 622-5 by an angle with respect to the first folding axis 131. Based on a volume corresponding to a sub-space in which the external electronic device 170 is positioned among the sub-spaces 622-1, 622-2, 622-3, 622-4, and 622-5, the electronic device 101 may change the volume of the audio signal transmitted to the external electronic device 170. Volumes corresponding to the sub-spaces 622-1, 622-2, 622-3, 622-4, and 622-5 may be set as illustrated in Table 1. An embodiment is not limited thereto.

**[Table 1]**

| | First external space 621 | Sub-spaces 622-1 and 622-5 | Sub-spaces 622-2 and 622-4 | Sub-space 622-3 |
|---|---|---|---|---|
| Volume of audio signal corresponding to A video | 100% | 60% | 30% | 0% |
| Volume of audio signal corresponding to B video | 0% | 30% | 60% | 100% |

Referring to Table 1, the electronic device 101 identifying the external electronic device 170 positioned at the point P2 in the sub-space 622-1 in the second external space 622 may transmit, to the external electronic device 170, a coupling of an audio signal corresponding to the A video and having a volume of 60% and an audio signal corresponding to the B video and having a volume of 30%. The electronic device 101 identifying the external electronic device 170 positioned at a point P3 in the sub-space 622-3 of the second external space 622 may transmit the audio signal corresponding to the B video to the external electronic device 170. Referring to Table 1, as the external electronic device 170 moves in a direction away from the first external space 621, a volume of the audio signal corresponding to the A video displayed on the plane 411 associated with the first external space 621 may be gradually decreased. For example, the electronic device 101 may fade-out the audio signal corresponding to the A video based on identifying the external electronic device 170 moving in the direction away from the first external space 621. Together with the fade-out, the electronic device 101 may gradually increase a volume of the audio signal corresponding to the B video displayed on the plane 412 associated with the second external space 622 in which the external electronic device 170 is included.

As described above, the electronic device 101 according to an embodiment may change the volume of the audio signal transmitted to the external electronic device 170 based on the movement of the external electronic device 170. The electronic device 101 may display the screen 610 for confirming a change in the audio signal to be transmitted to the external electronic device 170. The screen 610 may be displayed on the flexible display 150 to adjust a connection of an audio signal corresponding to the external electronic device 170 based on the movement of the external electronic device 170.

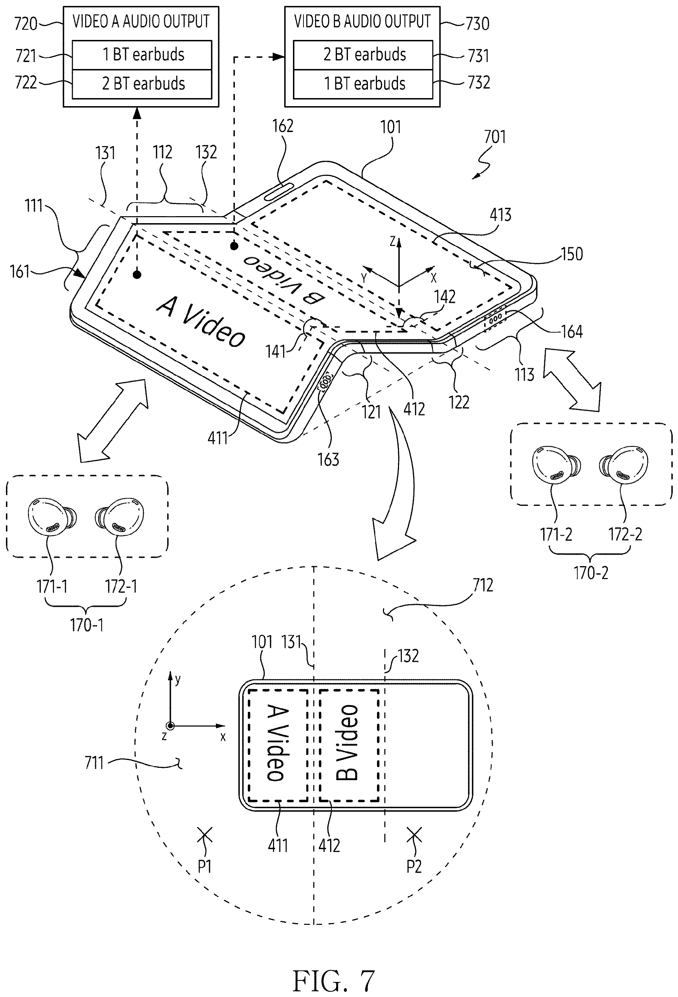

FIG. 7 illustrates an example of an operation of an electronic device 101 for identifying a relationship between an external electronic device 170 and an audio signal. The electronic device 101 of FIGS. 1 to 2 and/or the processor 210 of FIG. 2 may perform the operation of the electronic device 101 of FIG. 7. The operation of the electronic device 101 described with reference to FIG. 7 may be associated with the operations of FIG. 3.

Referring to FIG. 7, an exemplary state 701 of the electronic device 101 corresponding to a bidirectional flex state is illustrated. In the state 701, the electronic device 101 may display one or more videos by using flat planes 411, 412, and 413 of a flexible display 150 divided by a first folding axis 131 and a second folding axis 132. In the state 701 of FIG. 7, the electronic device 101 may display a A video on the plane 411 and a B video on the plane 412.

Referring to FIG. 7, the electronic device 101 according to an embodiment may transmit audio signals to a plurality of external electronic devices 170-1 and 170-2. Even though the external electronic devices 170-1 and 170-2 having an earbud form are illustrated, an embodiment is not limited thereto. Each of the external electronic devices 170-1 and 170-2 may include first sub-devices 171-1 and 171-2 corresponding to a left ear and second sub-devices 172-1 and 172-2 corresponding to a right ear. The audio signals transmitted to the plurality of external electronic devices 170-1 and 170-2 may be independently determined based on positions of the external electronic devices 170-1 and 170-2. The electronic device 101 may determine an audio signal to be transmitted to each of the external electronic devices 170-1 and 170-2 based on positions of the external electronic devices 170-1 and 170-2 with respect to a first external space 711 and a second external space 712 divided by a folding axis (the first folding axis 131 in the exemplary state 701 of FIG. 7). For example, the electronic device 101 may determine an audio signal to be transmitted to each of the external electronic devices 170-1 and 170-2 among audio signals corresponding to each of the A video and the B video.

The electronic device 101 according to an embodiment may display a screen for determining the audio signals to be transmitted to the external electronic devices 170-1 and 170-2 on the flexible display 150. In the exemplary state 701 of FIG. 7, the electronic device 101 may display a screen 720 for selecting an external electronic device to transmit the audio signal corresponding to the A video in the plane 411 on which the A video is displayed. The electronic device 101 may display a screen 730 for selecting an external electronic device to transmit the audio signal corresponding to the B video in the plane 412 on which the B video is displayed. In the screens 720 and 730, the electronic device 101 may provide a list of the external electronic devices 170-1 and 170-2 paired to the electronic device 101.

Referring to FIG. 7, the screens 720 and 730 displayed by the electronic device 101 on the flexible display 150 are illustrated in the state 701 of identifying the external electronic device 170-1 positioned at a point P1 in the first external space 711 including the plane 411 on which the A video is displayed and the external electronic device 170-2 positioned at a point P2 in the second external space 712 including the plane 412 on which the B video is displayed. The electronic device 101 may recommend mapping between audio signals and the external electronic devices 170-1 and 170-2 by using an order of the external electronic devices 170-1 and 170-2 displayed in the screens 720 and 730.

For example, in the screen 720 for selecting the external electronic device to transmit the audio signal corresponding to the A video, the electronic device 101 may display a visual object 721 corresponding to the external electronic device 170-1 adjacent to the plane 411 on which the A video is displayed with a higher priority than a visual object 722 corresponding to the other external electronic device 170-2. For example, in the screen 730 for selecting the external electronic device to transmit the audio signal corresponding to the B video, the electronic device 101 may display a visual object 731 corresponding to the external electronic device 170-2 adjacent to the plane 412 on which the B video is displayed with a higher priority than a visual object 732 corresponding to the external electronic device 170-1. An embodiment is not limited thereto, and the electronic device 101 may emphasize the visual object 731 in the screen 730 by using a font, a color, and/or an icon.

In the state 701 of FIG. 7, in response to an input for selecting (e.g., clicking and/or touching) any one of the visual objects 721 and 722 in the screen 720, the electronic device 101 may identify the external electronic device to transmit the audio signal corresponding to the A video among the external electronic devices 170-1 and 170-2. In response to an input for selecting any one of the visual objects 731 and 732 in the screen 730, the electronic device 101 may identify the external electronic device to transmit the audio signal corresponding to the B video. For example, based on the input indicating the selection of the visual object 721 in the screen 720, the electronic device 101 may transmit the audio signal corresponding to the A video to the external electronic device 170-1.

In an embodiment, in the state 701 in which the screens 720 and 730 are simultaneously displayed, the electronic device 101 that first receives an input for any one of the screens 720 and 730 may remove a visual object corresponding to an external electronic device corresponding to the input from another one of the screens 720 and 730. For example, the electronic device 101 identifying the input indicating the selection of the visual object 721 in the screen 720 may cease displaying the visual object 732 indicating the external electronic device 170-1 corresponding to the visual object 721 in the screen 730. In the example, the electronic device 101 may transmit the audio signal corresponding to the A video to the external electronic device 170-1 in response to the input. In the example, in response to the input, the electronic device 101 may cease displaying all of the screens 720 and 730, and transmit the audio signal corresponding to the B video to the external electronic device 170-2 while transmitting the audio signal corresponding to the A video to the external electronic device 170-1.

As described above, the electronic device 101 according to an embodiment may display audio signals corresponding to videos and a screen (e.g., the screens 720 and 730) for setting a relationship between the external electronic devices 170-1 and 170-2 while displaying the videos on the flat planes 411 and 412 of the flexible display 150. Based on the screen, the electronic device 101 may identify an input for setting the relationship. The screen may be displayed based on movement (e.g., movement between the first external space 711 and the second external space 712) of an external electronic device (e.g., at least one of the external electronic devices 170-1 and 170-2) based on a UWB communication circuit. The screen may be displayed by establishing and/or releasing a communication link between the electronic device 101 based on a Bluetooth communication circuit and the external electronic device (e.g., the external electronic devices 170-1 and 170-2).

Hereinafter, in order to reduce power consumption of the UWB communication circuit, an operation of the electronic device 101 for dynamically switching a state of the UWB communication circuit will be described.

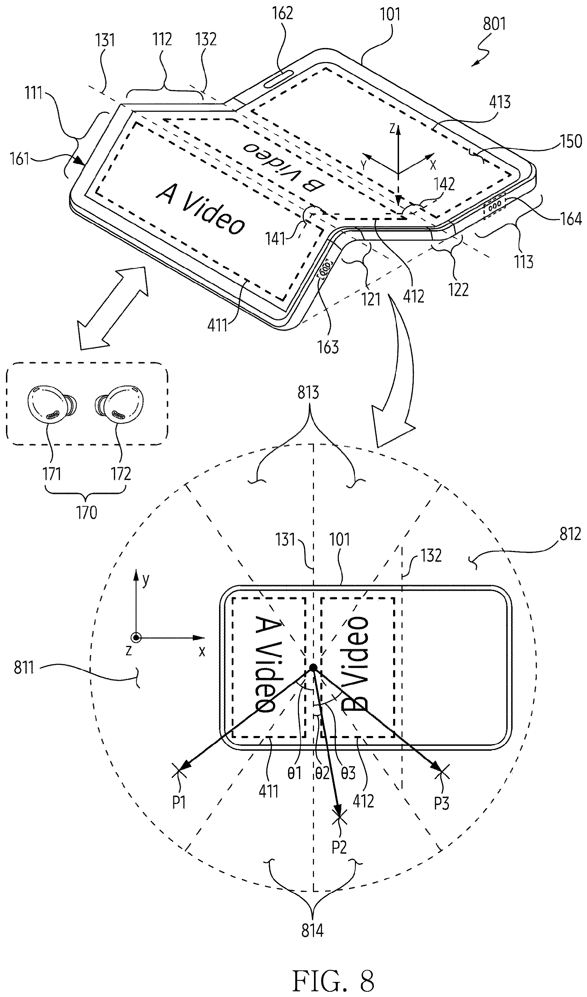

FIG. 8 illustrates an example of an operation of an electronic device 101 that adjusts a state of a communication circuit (e.g., the UWB communication circuit 242 of FIG. 2) for a UWB. The electronic device 101 of FIGS. 1 to 2 and/or the processor 210 of FIG. 2 may perform the operation of the electronic device 101 of FIG. 8. The operation of the electronic device 101 described with reference to FIG. 8 may be associated with the operations of FIG. 3.

Referring to FIG. 8, an exemplary state 801 of the electronic device 101 corresponding to a bidirectional flex state is illustrated. The state 801 of FIG. 8 may correspond to the state 401 of FIG. 4A. The electronic device 101 according to an embodiment may display videos on planes 411 and 412 of a flexible display 150 in the state 801. The electronic device 101 may transmit any one of audio signals corresponding to the videos to an external electronic device 170 paired to the electronic device 101. While transmitting the audio signal to the external electronic device 170, the electronic device 101 may track and/or monitor a relative position of the external electronic device 170 with respect to the electronic device 101.

In an embodiment, the electronic device 101 may track a position of the external electronic device 170 with an error of less than approximately 10 cm by using a wireless signal of the UWB. The electronic device 101 may change the audio signal transmitted to the external electronic device 170 based on movement of the external electronic device 170. As described above with reference to FIGS. 1 to 7, the electronic device 101 may change the audio signal transmitted to the external electronic device 170 based on a plane of the flexible display 150 adjacent to the external electronic device 170 being changed by the movement of the external electronic device 170. In the exemplary state 801 of FIG. 8, based on whether the external electronic device 170 is moved between external spaces divided by a first folding axis 131, the electronic device 101 may change the audio signal transmitted to the external electronic device 170. In other words, in a case that the external electronic device 170 ceases to be in any one of the external spaces, or the external electronic device 170 is positioned relatively far from the first folding axis 131, the electronic device 101 may not change the audio signal transmitted to the external electronic device 170.

For example, tracking the position of the external electronic device 170 by using the UWB communication circuit may cause an increase in power consumption by the UWB communication circuit. The electronic device 101 may track the external electronic device 170 by using a means (e.g., the Bluetooth communication circuit 246, the camera, the proximity sensor, the grip sensor, and/or the ultrasonic sensor of FIG. 2) different from the UWB communication circuit in a case that the external electronic device 170 ceases to be in any one of the external spaces, or the external electronic device 170 is positioned relatively far from the first folding axis 131, in order for the electronic device 101 to minimize the increase in the power consumption by the UWB communication circuit.

Referring to FIG. 8, a first external space 811 to a fourth external space 814 divided based on the first folding axis 131 are illustrated. Each of the first external space 811 and a second external space 812 may be formed in a direction to which the plane 411 and the plane 412 are directed. A third external space 813 and the fourth external space 814 may be formed to include the first folding axis 131. The electronic device 101 may activate the UWB communication circuit based on whether the position of the external electronic device 170 is included in any space of the first external space 811 to the fourth external space 814. For example, the electronic device 101 identifying the external electronic device 170 (e.g., the external electronic device 170 positioned at a point P2) included in the third external space 813 and/or the fourth external space 814 including the first folding axis 131 may switch the UWB communication circuit to an activated state and track the position of the external electronic device 170 with respect to the electronic device 101 by using the UWB communication circuit in the activated state.

For example, the electronic device 101 identifying the external electronic device 170 positioned in the first external space 811 and/or the second external space 812 spaced apart from the first folding axis 131 may control the UWB communication circuit in an deactivated state. In the deactivated state, the electronic device 101 may provide a power signal equal to or less than a preset voltage to the UWB communication circuit. For example, the electronic device 101 identifying the external electronic device 170 positioned at a point P3 in the second external space 812 may transmit an audio signal corresponding to a B video displayed on the plane 412 corresponding to the second external space 812 to the external electronic device 170. In the example, the electronic device 101 may switch the UWB communication circuit to the deactivated state and track the position of the external electronic device 170 based on a Bluetooth communication circuit. The electronic device 101 using the Bluetooth communication circuit may track the position of the external electronic device 170 based on an error exceeding an error of the UWB communication circuit. The electronic device 101 using the Bluetooth communication circuit may track the position of the external electronic device 170 based on power consumption lower than power consumption of the UWB communication circuit.

For example, the electronic device 101 identifying the external electronic device 170 moved from the point P3 in the second external space 812 to the point P2 in the fourth external space 814 may switch the UWB communication circuit to the activated state. In the activated state, the electronic device 101 may provide a power signal exceeding the preset voltage to the UWB communication circuit. Based on the UWB communication circuit, the electronic device 101 may identify the movement of the external electronic device 170 with respect to the first folding axis 131. In a case that the external electronic device 170 is moved beyond the first folding axis 131 to a point P1 adjacent to the plane 411 on which a A video is displayed, the electronic device 101 may automatically change an audio signal to be transmitted to the external electronic device 170 or display a screen (e.g., the screen 610 of FIG. 6 and/or the screens 720 and 730 of FIG. 7) for changing the audio signal to be transmitted to the external electronic device 170. After the external electronic device 170 is moved to the first external space 811, the electronic device 101 may change the UWB communication circuit to the deactivated state and track the external electronic device 170 by using the Bluetooth communication circuit.

As described above, the electronic device 101 according to an embodiment may not utilize the UWB communication circuit to track the external electronic device 170 in an entire time duration in which an audio signal is transmitted to the external electronic device 170. In order to reduce power consumption required to drive the UWB communication circuit, the electronic device 101 may activate the UWB communication circuit at a specific position (e.g., a position in the third external space 813 and/or the fourth external space 814 of FIG. 8) for changing the audio signal to be transmitted to the external electronic device 170. The electronic device 101 may utilize another means (e.g., the Bluetooth communication circuit) that requires relatively little power at another position distinguished from the position. The electronic device 101 may reduce power consumed by the UWB communication circuit by conditionally activating the UWB communication circuit.

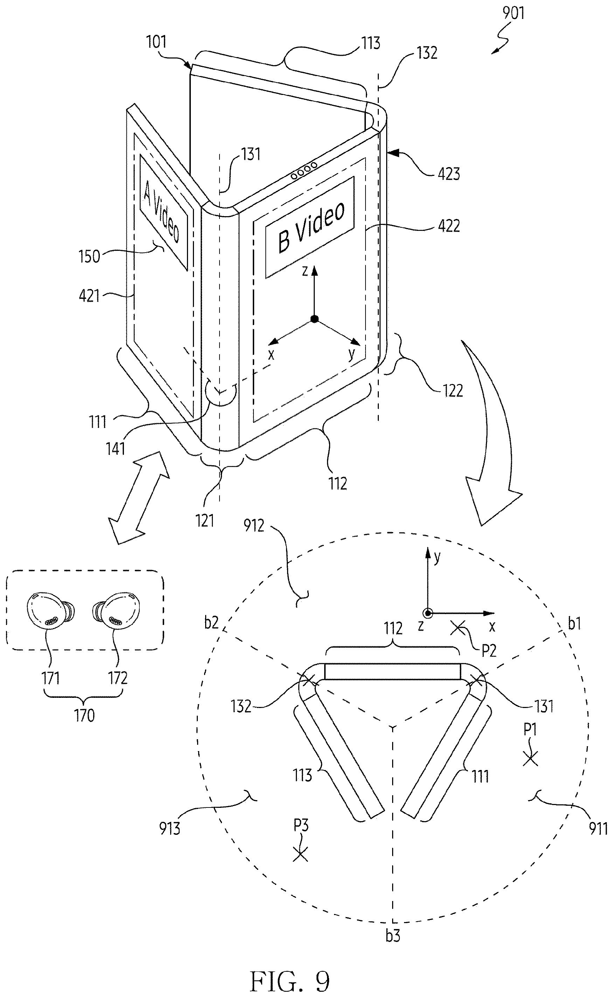

FIG. 9 exemplarily illustrates a state 901 of an electronic device 101 according to an embodiment. The electronic device 101 of FIGS. 1 to 2 and/or the processor 210 of FIG. 2 may perform an operation of the electronic device 101 of FIG. 9. The operation of the electronic device 101 described with reference to FIG. 9 may be associated with the operations of FIG. 3.

Referring to FIG. 9, the exemplary state 901 of the electronic device 101 corresponding to a tridirectional flex state is illustrated. The electronic device 101 may determine that a state of the electronic device 101 is in the tridirectional flex state based on a first angle 141 and a second angle 142 identified by using one or more sensors disposed in a first hinge assembly 121 and/or a second hinge assembly 122. The state 901 of FIG. 9 may correspond to the state 402 of FIG. 4B.

In the exemplary state 901 of FIG. 9, the electronic device 101 according to an embodiment may display videos on planes 421, 422, and 423 of a flexible display 150 divided by a first folding axis 131 and a second folding axis 132. Referring to FIG. 9, the electronic device 101 may display a A video on the plane 421 of the flexible display 150 disposed on a first housing 111, and a B video on the plane 422 of the flexible display 150 disposed on a second housing 112. While displaying a plurality of videos in the different planes 421, 422, and 423 of the flexible display 150, the electronic device 101 may identify an external electronic device 170. The electronic device 101 identifying the external electronic device 170 may transmit at least one of audio signals corresponding to the plurality of videos to the external electronic device 170.

The electronic device 101 according to an embodiment may determine an audio signal to be transmitted to the external electronic device 170 based on a position of the external electronic device 170 with respect to external spaces divided by the first folding axis 131 and the second folding axis 132. Referring to FIG. 9, an external space including the electronic device 101 in the tridirectional flex state may be divided into a first external space 911, a second external space 912, and a third external space 913 to which each of the planes 421, 422, and 423 of the flexible display 150 is directed. The external space including the electronic device 101 may be divided based on a central angle of approximately 120 °. Among the first external space 911 to the third external space 913, the electronic device 101 may determine the audio signal to be transmitted to the external electronic device 170 based on an external space in which the external electronic device 170 is positioned.

In the exemplary state 901 of FIG. 9, the electronic device 101 identifying the external electronic device 170 at a point P1 in the first external space 911 to which the plane 421 of the flexible display 150 disposed on the first housing 111 is directed may transmit an audio signal corresponding to the A video displayed through the plane 421 to the external electronic device 170. Based on identifying the external electronic device 170 moved to a point P2 in the second external space 912 while transmitting the audio signal corresponding to the A video to the external electronic device 170, the electronic device 101 may execute a function for changing the audio signal transmitted to the external electronic device 170.

For example, the electronic device 101 may display a screen (e.g., the screen 610 of FIG. 6 and the screens 720 and 730 of FIG. 7) for resetting the audio signal to be transmitted to the external electronic device 170 on the flexible display 150. For example, the electronic device 101 may couple the audio signal corresponding to the A video and an audio signal corresponding to the B video based on volumes based on a position of the external electronic device 170 with respect to the electronic device 101, as illustrated in Table 1, and transmit the coupled audio signals to the external electronic device 170. For example, the electronic device 101 may change the audio signal transmitted to the external electronic device 170 from the audio signal corresponding to the A video to the audio signal corresponding to the B video displayed on the plane 422 of the flexible display 150 disposed on the second housing 112 associated with the second external space 912. Similarly, the electronic device 101 identifying the external electronic device 170 moved to a point P3 in the third external space 913 may execute the function for changing the audio signal transmitted to the external electronic device 170.

The electronic device 101 according to an embodiment may use communication circuitry (e.g., the UWB communication circuit 242 and/or the Bluetooth communication circuit 246 of FIG. 2) included in the electronic device 101 to track the position of the external electronic device 170. The electronic device 101 may activate the UWB communication circuit based on identifying the external electronic device 170 adjacent to boundary lines b1, b2, and b3 between the first external space 911 to the third external space 913. Before activating the UWB communication circuit, the electronic device 101 may identify the movement of the external electronic device 170 by using the Bluetooth communication circuit.

Hereinafter, referring to FIGS. 10A to 10B, an operation of the electronic device 101 moving a video in the planes 421, 422, and 423 of the flexible display 150 will be described based on movement of the external electronic device 170 with respect to the electronic device 101.

FIGS. 10A to 10B illustrate an example of an operation of an electronic device 101 that adjusts a position of a video displayed on a flexible display 150 based on a position of an external electronic device 170. The electronic device 101 of FIGS. 1 to 2 and/or the processor 210 of FIG. 2 may perform the operation of the electronic device 101 of FIGS. 10A to 10B. The operation of the electronic device 101 described with reference to FIGS. 10A to 10B may be associated with the operations of FIG. 3.

Referring to FIGS. 10A to 10B, exemplary states 1001 and 1002 of the electronic device 101 corresponding to a tridirectional flex state are illustrated. In the state 1001 of FIG. 10A, the electronic device 101 may display a video 1010 on one plane 421 of flat planes 421, 422, and 423 of the flexible display 150. The electronic device 101 may transmit an audio signal corresponding to the video 1010 to the external electronic device 170 connected wirelessly.

In the state 1001 of FIG. 10A, the electronic device 101 may identify the position of the external electronic device 170 while transmitting the audio signal corresponding to the video 1010 to the external electronic device 170 including a speaker. Movement of the external electronic device 170 may be identified based on external spaces (e.g., a first external space 911 to a third external space 913) including each of directions to which the flat planes 421, 422, and 423 of the flexible display 150 according to an embodiment are directed. For example, in a case that a user wearing the external electronic device 170 moves from a point P1 in the first external space 911 to a point P2 in a second external space 912, the electronic device 101 may identify the movement of the external electronic device 170 by using a UWB communication circuit (e.g., the UWB communication circuit 242 of FIG. 2).

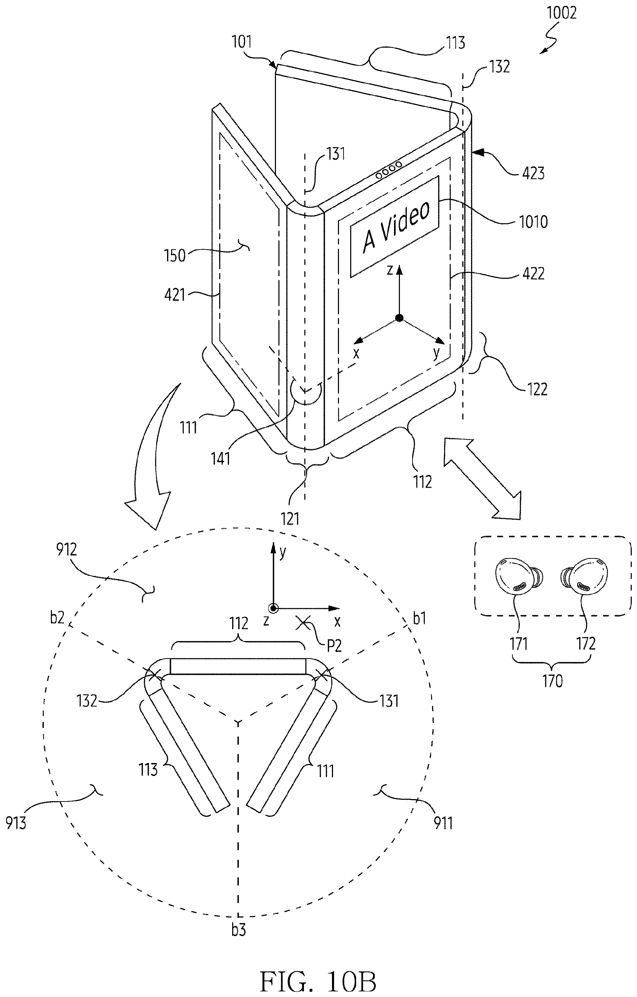

In the state 1001 of FIG. 10A, the electronic device 101 identifying the external electronic device 170 moved to the point P2 of the second external space 912 may switch to the state 1002 of FIG. 10B. From the state 1001 of FIG. 10A, the electronic device 101 may switch to the state 1002 of FIG. 10B by moving a video to the plane 422 corresponding to the second external space 912. For example, as the external electronic device 170 is moved from the point P1 in the first external space 911 to the point P2 in the second external space 912, a plane of the flexible display 150 adjacent to the external electronic device 170 may be changed from the plane 411 to the plane 422. The electronic device 101 according to an embodiment may move the video 1010 to the plane 422 adjacent to the external electronic device 170. In the state 1002 of FIG. 10B, the electronic device 101 may display the video 1010 on the plane 422 of the flexible display 150 disposed on a second housing 112 associated with the second external space 912. In the state 1002 in which the video 1010 is moved from the plane 411 to the plane 422, the electronic device 101 may reduce brightness of the other planes 421 and 423 different from the plane 422 to less than preset brightness.

Referring to FIG. 10B, based on identifying the external electronic device 170 moved from the first external space 911 to the second external space 912, the electronic device 101 may move the video 1010 corresponding to the audio signal transmitted to the external electronic device 170. Based on the movement of the video 1010, the electronic device 101 may provide a user experience, such as the video 1010 following the external electronic device 170. In the state 1002 of FIG. 10B, in a case of identifying the external electronic device 170 moved to the third external space 913, the electronic device 101 may move the video 1010 to the plane 423 of the flexible display 150 on a third housing 113 associated with the third external space 913.

FIG. 11 illustrates an example of a flowchart of an electronic device according to an embodiment. The electronic device 101 of FIGS. 1 to 2 and/or the processor 210 of FIG. 2 may perform at least one of the operations of FIG. 11. At least one of the operations of FIG. 11 may be associated with the operation 350 of FIG. 3.

In the following embodiment, each of the operations may be sequentially performed, but is not necessarily performed sequentially. For example, an order of each of the operations may be changed, and at least two operations may be performed in parallel.

Referring to FIG. 11, in operation 1110, a processor of the electronic device according to an embodiment may display a video (e.g., the video 1010 of FIGS. 10A to 10B) on a first portion of flat portions of a flexible display (e.g., the flexible display 150 of FIGS. 1 to 10B). The first portion of the operation 1110 may correspond to the plane 421 in the state 1001 of FIG. 10A. The processor may identify the flat portions of the flexible display divided by a folding axis (e.g., a first folding axis 131 and/or a second folding axis 132 of FIGS. 1 to 10B) based on a form, a posture, and/or a direction of the electronic device identified by using one or more sensors. The video displayed on the first portion may further include audio data synchronized with the video. A combination of the video and the audio data may be referred to as media content.

Referring to FIG. 11, in operation 1120, the processor of the electronic device according to an embodiment may identify a position of an external electronic device with respect to the electronic device by using a first communication circuit (e.g., the UWB communication circuit 242 of FIG. 2) for a UWB based on identifying the external electronic device (e.g., the external electronic device 170 of FIG. 1 to 10B) including the speaker. For example, the electronic device 101 may identify a position of the operation 1120 based on the operations 320 and 330 of FIG. 3. For example, the electronic device 101 may identify the position of the operation 1120 based on the operation described with reference to FIGS. 5A to 5B. In a case that the flexible display is folded by one or more folding axes of the electronic device, the electronic device may identify an external space including the position among external spaces (e.g., the first external space 911 to the third external space 913 of FIGS. 10A to 10B) divided by the folding axes.

Referring to FIG. 11, in operation 1130, the processor of the electronic device according to an embodiment may identify whether the external electronic device is adjacent to a second portion of the flexible display different from the first portion. The electronic device may identify a portion positioned closest to the position of the operation 1120 among the flat portions of the flexible display. In a case that the external electronic device is adjacent to the first portion (1130-NO), the processor may maintain identifying the position of the external electronic device based on the operation 1120. In a case that the external electronic device is adjacent to the second portion (1130-YES), the processor may perform operation 1140.

Referring to FIG. 11, in the operation 1140, the processor of the electronic device according to an embodiment may change a portion in which the video of the operation 1110 is displayed from the first portion to the second portion. The second portion of the operation 1140 may correspond to the plane 422 of FIG. 10B. As the portion in which the video is displayed is changed from the first portion to the second portion, the processor may move a position of the video to a position adjacent to the external electronic device. For example, the processor may move the video to a portion of the flexible display viewable by a user wearing the external electronic device.

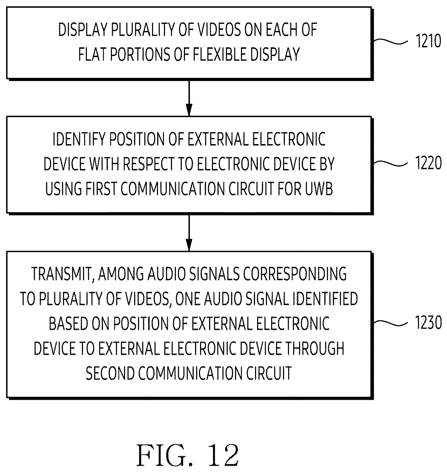

FIG. 12 illustrates an example of a flowchart of an electronic device according to an embodiment. The electronic device 101 of FIGS. 1 to 2 and/or the processor 210 of FIG. 2 may perform at least one of the operations of FIG. 12. At least one of the operations of FIG. 12 may be associated with the operations of FIG. 3 and/or 12.

In the following embodiment, each of the operations may be performed sequentially, but is not necessarily performed sequentially. For example, an order of each of the operations may be changed, and at least two operations may be performed in parallel.

Referring to FIG. 12, in operation 1210, a processor of the electronic device according to an embodiment may display a plurality of videos on respective flat portions of the flexible display (e.g., the flexible display 150 of FIGS. 1 to 9 and FIGS. 10A to 10B). The flexible display of the electronic device may be bent by one or more hinge assemblies (e.g., the first hinge assembly 121 and/or the second hinge assembly 122 of FIG. 1). The processor may identify a form of the flexible display bent by the one or more hinge assemblies by using one or more sensors corresponding to the one or more hinge assemblies. Based on the form, the processor may determine the flat portions of the flexible display on which each of the plurality of videos is to be displayed.

Referring to FIG. 12, in operation 1220, the processor of the electronic device according to an embodiment may identify a position of an external electronic device (e.g., the external electronic device 170 of FIGS. 1 to 9 and 10A to 10B) with respect to the electronic device by using a first communication circuit (e.g., the UWB communication circuit 242 of FIG. 2) for a UWB. Based on identifying an external electronic device including a speaker by using a second communication circuit (e.g., the Bluetooth communication circuit 246 of FIG. 2), the processor may perform the operation 1220. The processor may identify an azimuth angle of the external electronic device with respect to the electronic device by using the first communication circuit. The processor may identify one external space including the external electronic device in external spaces divided by the flat portions of the flexible display by using the first communication circuit. The processor may obtain coordinate values indicating the position of the external electronic device by using the first communication circuit.

Referring to FIG. 12, in operation 1230, the processor of the electronic device according to an embodiment may transmit, among audio signals corresponding to the plurality of videos, an audio signal identified based on the position of the external electronic device to the external electronic device through the second communication circuit (e.g., the Bluetooth communication circuit 246 of FIG. 2). For example, the processor may transmit an audio signal corresponding to a video displayed on any one portion adjacent to the external electronic device among the flat portions of the flexible display to the external electronic device.

In an embodiment, while transmitting a first audio signal through the second communication circuit based on the operation 1230, the processor may change an audio signal transmitted to the external electronic device into a second audio signal different from the first audio signal based on identifying movement of the external electronic device. For example, in a case that the portion of the flexible display adjacent to the external electronic device is changed based on the movement of the external electronic device, the processor may execute a function for changing the audio signal transmitted to the external electronic device. The function may include an operation of displaying a screen and/or a visual object for identifying an input changing the audio signal to be transmitted to the external electronic device, such as the screen 610 of FIG. 6 and/or the screens 720 and 730 of FIG. 7.

As described above, the electronic device according to an embodiment may track a position of the external electronic device including the speaker by using a means such as the UWB. While displaying one or more videos through the flat portions of the flexible display, the electronic device may change the audio signal to be transmitted to the external electronic device, based on the position of the external electronic device, and/or move positions in the flexible display on which the one or more videos are displayed.

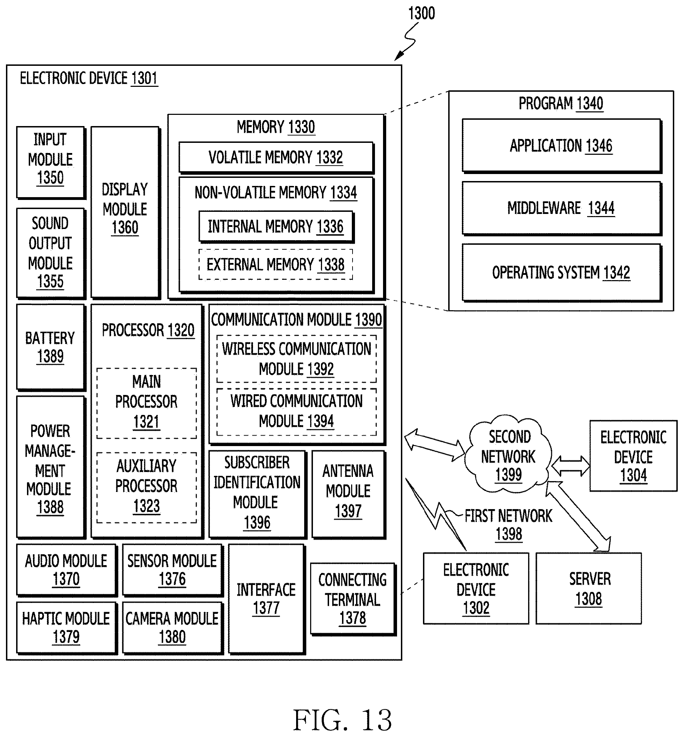

FIG. 13 is a block diagram of an electronic device 1301 in a network environment 1300 according to various embodiments. The electronic device 1301 of FIG. 13 may be an example of the electronic device 101 of FIGS. 1 to 9, FIGS. 10A to 10B. Referring to FIG. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module(SIM) 1396, or an antenna module 1397. In some embodiments, at least one of the components (e.g., the connecting terminal 1378) may be omitted from the electronic device 1301, or one or more other components may be added in the electronic device 1301. In some embodiments, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to an embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, an HDMI connector, a USB connector, an SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to an embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth^{™}, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 1364dB or less) for implementing mMTC, or U-plane latency (e.g., 0.5ms or less for each of downlink (DL) and uplink (UL), or a round trip of 13ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In an embodiment, based on a position of an external electronic device including a speaker, a method of changing an audio signal to be transmitted to the external electronic device may be required. An electronic device (e.g., the electronic device 101 of FIG. 1) according to an embodiment as described above may include a first housing (e.g., the first housing 111 of FIG. 1), a second housing (e.g., the second housing 112 of FIG. 1), a third housing (e.g., the third housing 113 of FIG. 1), a flexible display (e.g., the flexible display 150 of FIG. 1) disposed on the first housing, the second housing, and the third housing, one or more sensors (e.g., the sensor 230 of FIG. 2) for identifying a first angle (e.g., the first angle 141 of FIG. 1) of the first housing and the second housing, and a second angle (e.g., the second angle 142 of FIG. 1) of the second housing and the third housing, a first communication circuit (e.g., the UWB communication circuit 242 of FIG. 2) for an ultra-wideband (UWB), a second communication circuit (e.g., the Bluetooth communication circuit 246 of FIG. 2) for Bluetooth, and a processor (e.g., the processor 210 of FIG. 2). The processor may be configured to display a plurality of videos in respective flat portions of the flexible display distinguished by at least one of the first angle or the second angle. The processor may be configured to, based on identifying an external electronic device (e.g., the external electronic device 170 of FIG. 1) including a speaker, identify, by using the first communication circuit, a position of the external electronic device with respect to the electronic device. The processor may be configured to transmit, to the external electronic device through the second communication circuit, an audio signal identified based on the position among audio signals corresponding to the plurality of videos.

For example, the processor may be configured to, based on the identified position, display a visual object for matching the audio signal to be transmitted to the external electronic device among the audio signals on the flexible display.

For example, the processor may be configured to identify the position of the external electronic device while transmitting to the external electronic device a first audio signal with respect to a first video that is displayed in a first portion of the flexible display. The processor may be configured to display, based on identifying the external electronic device positioned in a second external space different from a first external space to which the first portion is directed by using the position, a screen for identifying the audio signal to be transmitted to the external electronic device among the audio signals.

For example, the processor may be configured to adjust, while transmitting the first audio signal to the external electronic device, a volume of the first audio signal transmitted to the external electronic device based on the position of the external electronic device with respect to the first portion.

For example, the processor may be configured to display, based on identifying the external electronic device positioned in the second external space by using the position, a visual object for changing the audio signal to be transmitted to the external electronic device in a second portion, which is directed to the second external space, among the portions of the flexible display.

For example, the processor may be configured to identify, while controlling the first communication circuit in a deactivated state, whether the external electronic device is moved based on the second communication circuit. The processor may be configured to, based on identifying the movement of the external electronic device by using the second communication circuit, switch, to identify the position of the external electronic device, a state of the first communication circuit from the deactivated state to an activated state.

For example, the electronic device may include a battery. The processor may be configured to identify, in a state that a state of charge (SOC) of the battery exceeds a preset SOC, or in a state that the battery is being charged, the position of the external electronic device by using the second communication circuit.

For example, the electronic device may include antennas (e.g., the antennas 511, 512, and 513 of FIGS. 5A to 5B) which are electrically connected to the first communication circuit and have positions spaced apart from each other. The processor may be configured to, based on identifying the external electronic device paired to the electronic device by using the second communication circuit, receive a wireless signal of the UWB from the external electronic device by using the antennas. The processor may be configured to identify, based on phase differences of the wireless signal identified at each of the antennas, the position of the external electronic device with respect to the electronic device.

For example, the processor may be configured to transmit, to the external electronic device, an audio signal corresponding to a video displayed in a portion, among the portions of the flexible display, that is adjacent to the external electronic device based on the position.

A method of an electronic device according to an embodiment as described above may include displaying (e.g., the operation 1210 of FIG. 12) a plurality of videos in respective flat portions of a flexible display of the electronic device. The method may include, based on identifying an external electronic device including a speaker, identifying (e.g., the operation 1220 of FIG. 12), by using a first communication circuit for an ultra-wideband (UWB), a position of the external electronic device with respect to the electronic device. The method may include transmitting (e.g., the operation 1230 of FIG. 12), to the external electronic device through a second communication circuit for Bluetooth, an audio signal identified based on the position among audio signals corresponding to the plurality of videos.

For example, the method may include, based on the identified position, displaying a visual object for matching the audio signal to be transmitted to the external electronic device among the audio signals on the flexible display.

For example, the identifying may include identifying the position of the external electronic device while transmitting to the external electronic device a first audio signal with respect to a first video that is displayed in a first portion of the flexible display. The identifying may include displaying, based on identifying the external electronic device positioned in a second external space different from a first external space to which the first portion is directed by using the position, a screen for identifying the audio signal to be transmitted to the external electronic device among the audio signals.

For example, the identifying may include adjusting, while transmitting the first audio signal to the external electronic device, a volume of the first audio signal transmitted to the external electronic device based on the position of the external electronic device with respect to the first portion.

For example, the identifying may include displaying, based on identifying the external electronic device positioned in the second external space by using the position, a visual object for changing the audio signal to be transmitted to the external electronic device in a second portion, which is directed to the second external space, among the portions of the flexible display.

For example, the identifying may include identifying, while controlling the first communication circuit in a deactivated state, whether the external electronic device is moved based on the second communication circuit. The identifying may include, based on identifying the movement of the external electronic device by using the second communication circuit, switching, to identify the position of the external electronic device, a state of the first communication circuit from the deactivated state to an activated state.

For example, the identifying may include identifying, in a state that a state of charge (SOC) of a battery of the electronic device exceeds a preset SOC, or in a state that the battery is being charged, the position of the external electronic device by using the second communication circuit.

For example, the identifying may include, based on identifying the external electronic device paired to the electronic device by using the second communication circuit, receiving a wireless signal of the UWB from the external electronic device by using antennas which are electrically connected to the first communication circuit and have positions spaced apart from each other. The identifying may include identifying, based on phase differences of the wireless signal identified at each of the antennas, the position of the external electronic device with respect to the electronic device.

For example, the transmitting may include transmitting, to the external electronic device, an audio signal corresponding to a video displayed in a portion, among the portions of the flexible display, that is adjacent to the external electronic device based on the position.

An electronic device (e.g., the electronic device 101 of FIG. 1) according to an embodiment as described above may include a first housing (e.g., the first housing 111 of FIG. 1), a second housing (e.g., the second housing 112 of FIG. 1), a third housing (e.g., the third housing 113 of FIG. 1), a flexible display (e.g., the flexible display 150 of FIG. 1) disposed on the first housing, the second housing, and the third housing, one or more sensors (e.g., the sensor 230 of FIG. 2) for identifying a first angle (e.g., the first angle 141 of FIG. 1) of the first housing and the second housing, and a second angle (e.g., the second angle 142 of FIG. 1) of the second housing and the third housing, a first communication circuit (e.g., the UWB communication circuit 242 of FIG. 2) for an ultra-wideband (UWB), a second communication circuit (e.g., the Bluetooth communication circuit 246 of FIG. 2) for Bluetooth, and a processor (e.g., the processor 210 of FIG. 2). The processor may be configured to display a video in a first portion among flat portions of the flexible display distinguished by at least one of the first angle or the second angle. The processor may be configured to identify, based on identifying an external electronic device (e.g., the external electronic device 170 of FIG. 1) including a speaker, by using the first communication circuit, a position of the external electronic device with respect to the electronic device. The processor may be configured to, based on identifying the position adjacent to a second portion different from the first portion, change a portion in which the video is displayed to the second portion from the first portion.

For example, the processor may be configured to identify, while controlling the first communication circuit in a deactivated state, whether the external electronic device is moved based on the second communication circuit. The processor may be configured to, based on identifying the movement of the external electronic device by using the second communication circuit, switch, to identify the position of the external electronic device, a state of the first communication circuit to an activated state from the deactivated state.

For example, the electronic device may include antennas (e.g., the antennas 511, 512, and 513 of FIGS. 5A to 5B) which are electrically connected to the first communication circuit and have positions spaced apart from each other. The processor may be configured to, based on identifying the external electronic device paired to the electronic device by using the second communication circuit, receive a wireless signal of the UWB from the external electronic device by using the antennas. The processor may be configured to identify, based on phase differences of the wireless signal identified at each of the antennas, the position of the external electronic device with respect to the electronic device.

A method of an electronic device according to an embodiment as described above may include displaying (e.g., the operation 1110 of FIG. 11) a video in a first portion among flat portions of a flexible display of the electronic device. The method may include, based on identifying an external electronic device including a speaker, by using a first communication circuit for an ultra-wideband (UWB), identifying (e.g., the operation 1120 of FIG. 11) a position of the external electronic device with respect to the electronic device. The method may include changing (e.g., the operation 1140 of FIG. 11), based on identifying the position adjacent to a second portion different from the first portion, a portion in which the video is displayed to the second portion from the first portion.

For example, the identifying may include identifying, while controlling the first communication circuit in a deactivated state, whether the external electronic device is moved based on the second communication circuit. The identifying may include, based on identifying the movement of the external electronic device by using the second communication circuit, switching, to identify the position of the external electronic device, a state of the first communication circuit to an activated state from the deactivated state.

For example, the identifying may include, based on identifying the external electronic device paired to the electronic device by using the second communication circuit, receiving a wireless signal of the UWB from the external electronic device by using antennas which are electrically connected to the first communication circuit and have positions spaced apart from each other. The identifying may include identifying, based on phase differences of the wireless signal identified at each of the antennas, the position of the external electronic device with respect to the electronic device.

An electronic device according to an embodiment as described above may include a first housing, a second housing, a third housing, a flexible display disposed on the first housing, the second housing, and the third housing, one or more sensors for identifying a first angle between the first housing and the second housing, and a second angle between the second housing and the third housing, a first communication circuit for performing UWB communication, a second communication circuit for performing Bluetooth communication, memory for storing executable instructions, and at least one processor for executing the instructions by accessing the memory. The at least one processor may be configured to display a plurality of videos in respective flat portions of the flexible display identified by at least one of the first angle or the second angle. The at least one processor may be configured to identify, using the first communication circuit, a position of an external electronic device that has established communication with the electronic device. The at least one processor may be configured to, based on the identified position of the external electronic device, transmit, to the external electronic device through the second communication circuit, an audio signal among audio signals corresponding to the plurality of videos.

A method of an electronic device according to an embodiment as described above may include displaying a plurality of videos in respective flat portions of a flexible display of the electronic device. The method may include identifying, by using a first communication circuit for performing UWB communication, a position of an external electronic device which has a communication connection with the electronic device. The method may include, based on the identified position, transmitting, to the external electronic device through a second communication circuit for performing Bluetooth communication, an audio signal among audio signals corresponding to the plurality of videos.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device, comprising:
a first housing;
a second housing;
a third housing;
a flexible display disposed on the first housing, the second housing, and the third housing;
one or more sensors for identifying a first angle between the first housing and the second housing, and a second angle between the second housing and the third housing;
a first communication circuit for performing ultra-wideband (UWB) communication;
a second communication circuit for performing Bluetooth communication;
memory, comprising one or more storage media, storing executable instructions; and
at least one processor, comprising processing circuitry, for executing the instructions by accessing the memory, wherein the instructions, when executed by the at least one processor individually or collectively, cause the electronic device to:
display a plurality of videos in respective flat portions of the flexible display identified by at least one of the first angle or the second angle;
identify, by using the first communication circuit, a position of the external electronic device that has established communication with the electronic device; and
based on the identified position of the external electronic device, transmit, to the external electronic device through the second communication circuit, an audio signal among audio signals corresponding to the plurality of videos.

2. The electronic device of claim 1, wherein the instructions, when executed by the at least one processor individually or collectively, cause the electronic device to:
based on the identified position, display a visual object for matching the audio signal to be transmitted to the external electronic device among the audio signals on the flexible display.

3. The electronic device of one of claim 1 to claim 2, wherein the instructions, when executed by the at least one processor individually or collectively, cause the electronic device to:
identify the position of the external electronic device while transmitting to the external electronic device a first audio signal with respect to a first video that is displayed in a first portion of the flexible display; and
display, based on identifying the external electronic device positioned in a second external space different from a first external space to which the first portion is directed by using the position, a screen for identifying the audio signal to be transmitted to the external electronic device among the audio signals.

4. The electronic device of one of claim 1 to claim 3, wherein the instructions, when executed by the at least one processor individually or collectively, cause the electronic device to:
adjust, while transmitting the first audio signal to the external electronic device, a volume of the first audio signal transmitted to the external electronic device based on the position of the external electronic device with respect to the first portion.

5. The electronic device of one of claim 1 to claim 4, wherein the instructions, when executed by the at least one processor individually or collectively, cause the electronic device to:
display, based on identifying the external electronic device positioned in the second external space by using the position, a visual object for changing the audio signal to be transmitted to the external electronic device in a second portion, which is directed to the second external space, among the portions of the flexible display.

6. The electronic device of one of claim 1 to claim 5, wherein the instructions, when executed by the at least one processor individually or collectively, cause the electronic device to:
identify, while controlling the first communication circuit in a deactivated state, whether the external electronic device is moved based on the second communication circuit; and
based on identifying the movement of the external electronic device by using the second communication circuit, switch, to identify the position of the external electronic device, a state of the first communication circuit from the deactivated state to an activated state.

7. The electronic device of one of claim 1 to claim 6, further comprising a battery,
wherein the instructions, when executed by the at least one processor individually or collectively, cause the electronic device to:
identify, in a state that a state of charge (SOC) of the battery exceeds a preset SOC, or in a state that the battery is being charged, the position of the external electronic device by using the second communication circuit.

8. The electronic device of one of claim 1 to claim 7, further comprising antennas which are electrically connected to the first communication circuit and have positions spaced apart from each other,
wherein the instructions, when executed by the at least one processor individually or collectively, cause the electronic device to:
based on identifying the external electronic device paired to the electronic device by using the second communication circuit, receive a wireless signal of the UWB from the external electronic device by using the antennas; and
identify, based on phase differences of the wireless signal identified at each of the antennas, the position of the external electronic device with respect to the electronic device.

9. The electronic device of one of claim 1 to claim 8, wherein the instructions, when executed by the at least one processor individually or collectively, cause the electronic device to:
transmit, to the external electronic device, an audio signal corresponding to a video displayed in a portion, among the portions of the flexible display, that is adjacent to the external electronic device based on the position.

10. A method of an electronic device, comprising:
displaying a plurality of videos in respective flat portions of a flexible display of the electronic device;
identifying, by using a first communication circuit for performing ultra-wideband (UWB) communication, a position of an external electronic device that has established communication with the electronic device; and
based on the identified position, transmitting, to the external electronic device through a second communication circuit for performing Bluetooth communication, an audio signal among audio signals corresponding to the plurality of videos.

11. The method of claim 10, further comprises:
based on the identified position, displaying a visual object for matching the audio signal to be transmitted to the external electronic device among the audio signals on the flexible display.

12. The method of one of claim 10 to claim 11, wherein the identifying comprises:
identifying the position of the external electronic device while transmitting to the external electronic device a first audio signal with respect to a first video that is displayed in a first portion of the flexible display; and
displaying, based on identifying the external electronic device positioned in a second external space different from a first external space to which the first portion is directed by using the position, a screen for identifying the audio signal to be transmitted to the external electronic device among the audio signals.

13. The method of one of claim 10 to claim 12, wherein the identifying comprises:
adjusting, while transmitting the first audio signal to the external electronic device, a volume of the first audio signal transmitted to the external electronic device based on the position of the external electronic device with respect to the first portion.

14. The method of one of claim 10 to claim 13, wherein the identifying comprises:
displaying, based on identifying the external electronic device positioned in the second external space by using the position, a visual object for changing the audio signal to be transmitted to the external electronic device in a second portion, which is directed to the second external space, among the portions of the flexible display.

15. The method of one of claim 10 to claim 14, wherein the identifying comprises:
identifying, while controlling the first communication circuit in a deactivated state, whether the external electronic device is moved based on the second communication circuit; and
based on identifying the movement of the external electronic device by using the second communication circuit, switching, to identify the position of the external electronic device, a state of the first communication circuit from the deactivated state to an activated state.
